(19)

**Europäisches Patentamt**
**European Patent Office**
**Office européen des brevets**

(11)  **EP 1 971 063 B1**

(12)  **EUROPEAN PATENT SPECIFICATION**

(45) Date of publication and mention
of the grant of the patent:
**10.10.2018  Bulletin 2018/41**

(51) Int Cl.:
*H04L 1/00* *(2006.01)*      *H04L 25/03* *(2006.01)*

(21) Application number: **08152722.8**

(22) Date of filing: **13.03.2008**

(54) **Method and apparatus for multiple antenna communications, and related systems and computer program**

Verfahren und Vorrichtung für Mehrantennenkommunikation, zugehörige Systeme und Computerprogramm

Procédé et appareil pour des communications avec plusieurs antennes, et systèmes associés et programme informatique

(84) Designated Contracting States:
**DE FR GB IT**

(30) Priority: **14.03.2007  PCT/IB2007/000630**

(43) Date of publication of application:
**17.09.2008   Bulletin 2008/38**

(73) Proprietor: **STMicroelectronics S.r.l.**
**20864 Agrate Brianza (MI) (IT)**

(72) Inventors:
 • **Siti, Massimiliano**
  **20068 Peschiera Borromeo (Milano) (IT)**
 • **Tomasoni, Alessandro**
  **20050 Lesmo (Milano) (IT)**
 • **Ferrari, Marco Pietro**
  **20139 Milano (IT)**
 • **Bellini, Sandro**
  **20052 Monza (Milano) (IT)**
 • **Volpatti, Oscar**
  **22069 Rovellasca (Como) (IT)**

(74) Representative: **Bosotti, Luciano**
**Buzzi, Notaro & Antonielli d'Oulx**
**Corso Vittorio Emanuele II, 6**
**10123 Torino (IT)**

(56) References cited:
**WO-A-2007/012053**

 • **ALESSANDRO TOMASONI ET AL: "Turbo-LORD: A MAP-Approaching Soft-Input Soft-Output Detector for Iterative MIMO Receivers" GLOBAL TELECOMMUNICATIONS CONFERENCE, 2007. GLOBECOM '07. IEEE, IEEE, PI, 1 November 2007 (2007-11-01), pages 3504-3508, XP031196593 ISBN: 978-1-4244-1042-2**
 • **SITI M ET AL: "On layer ordering techniques for near-optimal MIMO detectors" 2007 8TH IEEE WIRELESS COMMUNICATIONS AND NETWORKING CONFERENCE (IEEE CAT NO. 07TH8918) IEEE PISCATAWAY, NJ, USA, 2007, pages 1200-1205, XP007904694 ISBN: 1-4244-0659-5**
 • **SITI M ET AL: "On Reduced Complexity Soft-Output MIMO ML detection" IEEE TRANSACTIONS ON INFORMATION THEORY, US, 24 March 2006 (2006-03-24), pages 1-43, XP007904695 ISSN: 0018-9448**
 • **ALESSANDRO TOMASONI ET AL: "A Low Complexity Turbo MMSE Receiver for W-LAN MIMO Systems", COMMUNICATIONS, 2006. ICC '06. IEEE INTERNATIONAL CONFERENCE ON, IEEE, PI, 1 June 2006 (2006-06-01), pages 4119-4124, XP031025964, ISBN: 978-1-4244-0354-7**

**Description**

Technical Field

An embodiment of the present invention relates to communication technology.

Specifically, an embodiment of the invention was developed by paying attention to its possible use in closely approximating a soft-output-maximum a posteriori detector in multiple antenna communications employing soft-bit information output by an outer error-correction-code decoder.

Background

Throughout this description various publications are cited as representative of related art. For the sake of simplicity, these documents will be referred by reference numbers enclosed in square brackets, e.g., [x]. A complete list of these publications ordered according to the reference numbers is reproduced in the section entitled "List of references" at the end of the description.

Wireless transmission through multiple antennas, also referred to as MIMO (Multiple-Input Multiple-Output) [1]-[2], currently enjoys great popularity because of the demand of high data rate communication from multimedia services. Many applications are considering the use of MIMO to enhance the data rate and/or the robustness of the link.

Among others, a significant example is provided by the next generation of Wireless Local Area Networks (W-LANs), see *e.g.*, the IEEE 802.11n standard [3]. Another candidate application is represented by mobile "WiMax" systems for fixed wireless access (FWA) [4]-[5]. Besides fourth generation (4G) mobile terminals will likely endorse MIMO technology and as such may represent a very important commercial application for the present arrangement.

A current problem in this area is detecting multiple sources corrupted by noise in MIMO fading channels and generating bit soft output information to be passed to an external outer decoder.

The structure and operation of a narrowband MIMO system can be modelled as a linear complex baseband equation:

$$\mathbf{Y} = \mathbf{HX} + \mathbf{N} \qquad (1)$$

where **Y** is the received vector (size $R$ x 1), **X** the vector of transmitted complex Quadrature Amplitude Modulation (QAM) or Phase Shift Keying (PSK) constellation symbols (size $T$ x 1), **H** is the $R$ x $T$ channel matrix ($R$ and $T$ are the number of receive and transmit antennas, respectively) whose entries are the complex path gains from transmitter to receiver, samples of zero mean Gaussian random variables (RVs) with variance $\sigma^2$=0.5 per dimension. **N** is the noise vector of size $R$ x 1, whose elements are samples of independent circularly symmetric zero-mean complex Gaussian RVs with variance $N_0/2$ per dimension. $S$ is the complex constellation size. Equation (1) is considered valid per subcarrier for wideband orthogonal frequency division multiplexing (OFDM) systems.

Maximum-A-Posteriori (MAP) detection is desirable to achieve high-performance, as this is the optimal detection technique in presence of additive white Gaussian noise (AWGN) [6]. If $M_c$ is the number of bits per modulated symbol, for every transmitted bit $b_k$, $k = 1,..., T \cdot M_c$ it computes the a-posteriori probability (APP) ratio conditioned on the received channel symbol vector

$$\mathbf{Y}: \quad \frac{P(b_k = 1 \mid \mathbf{Y})}{P(b_k = 0 \mid \mathbf{Y})}$$

Practically, this is commonly handled in the logarithmic domain. Using Bayes' rule the a-posteriori log-likelihood ratios (LLRs) $L_{p,k}$ are computed as

$$L_{p,k} = \ln \frac{P(b_k = 1 \mid \mathbf{Y})}{P(b_k = 0 \mid \mathbf{Y})} = \ln \frac{\sum_{\mathbf{x} \in s_+^k} p(\mathbf{Y} \mid \mathbf{X}) p_a(\mathbf{X})}{\sum_{\mathbf{x} \in s_-^k} p(\mathbf{Y} \mid \mathbf{X}) p_a(\mathbf{X})} \qquad (2)$$

where $s_+^k$ is the set of $2^{T \cdot Mc-1}$ bit sequences having $b_k = 1$, and similarly $s_-^k$ is the set of bit sequences having $b_k = 0$; $p_a(\mathbf{X})$ represent the a-priori probabilities of **X.** They can be neglected if equiprobable symbols are considered, and in this case (2) reduces to the maximum-likelihood (ML) metric.

This is not true when extrinsic information is output by an outer decoder, *i.e.,* in iterative schemes, after the first detection-decoder stage is performed. The basic idea of combined iterative detection and decoding schemes is that the soft-output decoder and the detector exchange and update extrinsic soft information in an iterative fashion, according to a "turbo" decoding principle, in analogy to the iterative decoders first proposed for the Turbo Codes [7] and the subsequent turbo equalization schemes [8] to mitigate inter-symbol interference (ISI) in time varying fading channels.

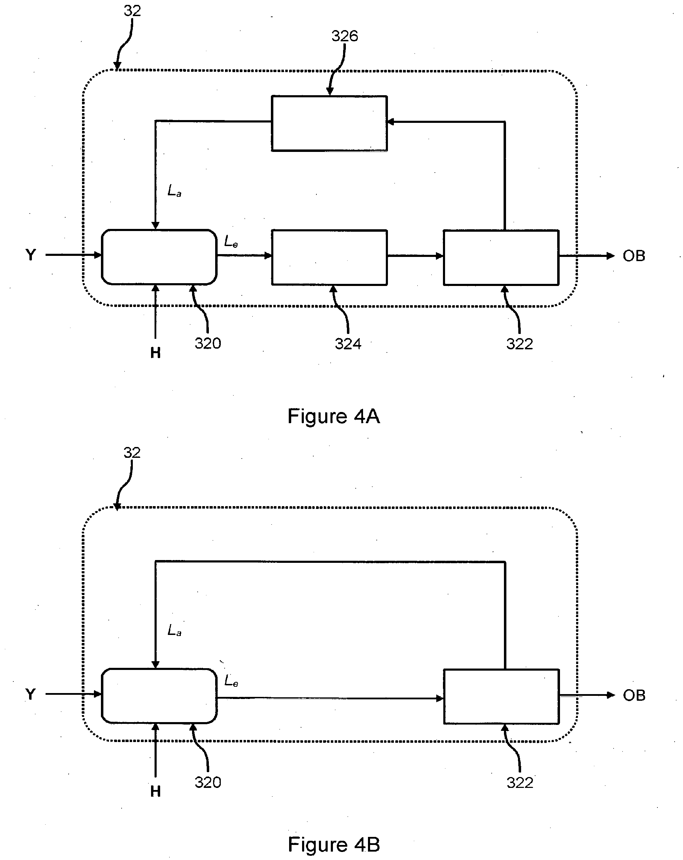

A general block diagram of such a system is portrayed in **FIGS. 4A** and **4B** that will be further discussed in the following.

Such schemes correspond to replacing the inner soft-in soft-out (SISO) decoder in [7] by the MIMO soft-out detector, and can be considered a turbo spatial-equalization scheme. They were first introduced in [12] and called "Turbo-BLAST". Other references of interest in that respect are [13]-[14].

From the MIMO system shown in equation (1) and assuming the Channel State Information (CSI) **H** at the receiver is known, one has:

$$p(\mathbf{Y} \mid \mathbf{X}) \propto \exp\left[ - \frac{1}{2\sigma_N^2} \|\mathbf{Y} - \mathbf{HX}\|^2 \right]$$

through a proportionality factor that can be neglected when substituted in equation (2) and where $\sigma_N^2 = N_0/2$. Denoting with $L_{a,j}$ the LLRs output by the decoder of the $j$-th bit in the transmitted sequence **x**, *i.e.,* the a-priori (logarithmic) bit probability information, and considering independent bit in a same modulated symbol, equation (2) can be further developed as:

$$L_{F,r} = \ln \frac{\sum_{x \in s_+^k} \exp\left( - \frac{1}{N_0} \|\mathbf{Y} - \mathbf{HX}\|^2 + \sum_{j=1}^{TM_c} b_j(\mathbf{X}) \frac{L_{a,j}}{2} \right)}{\sum_{x \in s_-^k} \exp\left( - \frac{1}{N_0} \|\mathbf{Y} - \mathbf{HX}\|^2 + \sum_{j=1}^{TM_c} b_j(\mathbf{X}) \frac{L_{a,j}}{2} \right)} \qquad (3)$$

where $b_j(\mathbf{X}) = \{\pm 1\}$ indicates the value of the $j$-th bit in the transmitted sequence **X** in binary antipodal notation.

Maximum A-posteriori Probability (MAP) - or also Maximum Likelihood (ML) - detection involves an exhaustive search over all the possible $S^T$ sequences of digitally modulated symbols: such a search becomes increasingly unfeasible with the growth of the spectral efficiency.

From equation (3) the following metric can be identified:

$$D(\mathbf{X}) = - \frac{1}{N_0} \|\mathbf{Y} - \mathbf{HX}\|^2 + \sum_{j=1}^{TM_c} b_j(\mathbf{X}) \frac{L_{a,j}}{2} = -D_{ED} + D_a \qquad (4)$$

where $D_{ED}$ is Euclidean distance (ED) term and $D_a$ is the a-priori term. The summation of exponentials involved in equation (4) is usually approximated according to the so-called "max-log" approximation:

$$\ln \sum_{\mathbf{X}} \exp[D(\mathbf{X})] \cong \ln \max_{\mathbf{X}} \exp[D(\mathbf{X})] \qquad (5)$$

Then equation (2) can be re-written as:

$$L_{p,k} \cong \max_{\mathbf{X} \in s_+^k} D(\mathbf{X}) - \max_{\mathbf{X} \in s_-^k} D(\mathbf{X}) \qquad (6)$$

corresponding to the so-called max-log-MAP detector. To conclude the description of the ideal detector, the a priori information $L_{a,k}$ is subtracted, so that the detector outputs the extrinsic information $L_{e,k}$ to be passed to an outer decoder:

$$L_{e,k} \;=\; L_{p,k} \;-\; L_{a,k} \qquad\qquad\qquad (7)$$

Because of their reduced complexity, sub-optimal linear detection procedures like Zero-Forcing (ZF) or Minimum Mean Square Error (MMSE) [9] are widely employed in wireless communications. To improve their performance, nonlinear detectors based on the combination of linear detectors and spatially ordered decision-feedback equalization (O-DFE) were proposed in [10]-[11]. There, the principles of interference cancellation and "layer" (*i.e.*, antenna) ordering are established: accordingly, in the remainder of this document the terms "layer" and "antenna" will be used as synonymous.

The related systems suffer from performance degradation due to noise enhancements and error propagation; moreover, they are not suitable for soft-output generation.

More attractive for bit interleaved coded modulation (BICM) systems are soft interference cancellation (SIC) iterative MMSE and error correction decoding strategies [12]-[14]. They represent a suboptimal way to compute equations (2)-(3) where the ED term in (4) is replaced by linear MMSE filtering and interference cancellation. Unfortunately they suffer from latency and complexity disadvantages, and also their performance can be significantly improved, as shown in the present document.

Another important class of detectors is represented by the so-called list detectors [15]-[18]. These are based on a combination of the ML and DFE principles. The basic common idea exploited in list detectors (LD) is to divide the streams to be detected into two groups: first, one or more reference transmit streams are selected and a corresponding list of candidate constellation symbols is determined; then, for each sequence in the list, interference is cancelled from the received signal and the remaining symbol estimates are determined by as many sub-detectors operating on reduced size sub-channels. By searching all possible $S$ cases for a reference layer, adopting O-DFE for the remaining $T$-1 sub-detectors, and utilizing a properly optimized layer ordering technique, a LD is able to maintain degradation within fractions of a dB in comparison with ML performance.

Notably, this can be accomplished through a parallel implementation. A drawback of this approach lies in that the computational complexity is high as T O-DFE detectors for $T$-1 sub-streams have to be computed. If efficiently implemented, it involves $O(T^A)$ complexity. Another major shortcoming of the prior work in list based detection is the absence of a procedure to produce soft bit metrics for use in coding and decoding procedures. For this reason, also Turbo or equivalently iterative SIC schemes have not been designed for LDs.

Another important family of ML-approaching detectors is based on lattice decoding procedures, applicable if the received signal can be represented as a lattice [19]-[20]. The so-called Sphere Decoder (SD) [25]-[26] is the most widely known example for these detectors and can be utilized to attain hard-output ML performance with significantly reduced complexity. However SD suffers from some important disadvantages, most notably, is not suitable for a parallel VLSI implementation; the number of lattice points to be searched is non-deterministic, sensitive to the channel and noise realizations, and to the initial radius. This is not desirable for real-time high-data rate applications. Finally, generation of soft output metrics is not easy with known lattice decoding procedures. As said for LDs, for this reason also Turbo or equivalently iterative SIC schemes have not been designed in conjunction with SD.

Besides performance (the benchmarks are optimal ML detection and linear MMSE, ZF on the two extremes, respectively) at least four basic features should be complied with by a MIMO detection arrangement in order to be effective and implementable in next generation wireless communication procedures:

- high (*i.e.*, optimal or near-optimal) performance;
- reduced overall complexity;
- the capability of generating bit soft output values, as this yields a significant performance gain in wireless systems employing error correction codes (ECC) coding and decoding procedures;
- the capability of the architecture of the procedure to be parallelized, which is significant for an Application Specific Integrated Circuit (ASIC) implementation and also to yield the low latency required by a real-time high-data rate transmission.

Accordingly, the present invention relates to a method of detecting sequences of digitally modulated symbols according to the preamble of Claim 1, which is known, e.g. from WO 2007/012053 A.

Summary

An embodiment of the invention provides a fully satisfactory response to those features, while also avoiding the shortcomings and drawbacks of the prior art arrangements as discussed in the foregoing.

The present invention is defined by the appended independent claims. Specific embodiments are defined in the dependent claims.

One or more embodiments of the invention relate to a method, a corresponding apparatus (a detector and a related receiver), as well as a corresponding related computer program product, loadable in the memory of at least one computer and including software code portions for performing the steps of the method when the product is run on a computer. As used herein, reference to such a computer program product is intended to be equivalent to reference to a computer-readable medium containing instructions for controlling a computer system to coordinate the performance of the method. Reference to "at least one computer" is evidently intended to highlight the possibility for the method to be implemented in a distributed/modular fashion among software and hardware components.

An embodiment described herein provides a method and apparatus to detect sequences of digitally modulated symbols, transmitted by multiple sources (e.g., antennas) and generate near-optimal extrinsic bit soft-output information from the knowledge of the a-priori information from an outer module, namely a soft-output error correction code decoder, providing:

- soft-output performance very close to that of the optimal MAP technique;
- implementation complexity extremely lower than that of the impractical MAP and high degree of parallelism as may be required by VLSI chip realizations.

No other soft-output MAP or near-MAP detectors able to yield at the same time good performance and a structure desirable for VLSI implementations have been proposed by others.

Such extrinsic information represents a refined version of the original input a-priori information and is then typically useful in iterative schemes featuring an inner detector, a deinterleaver, an outer module like a SISO error correction code decoder, and an interleaver on the feedback path.

An embodiment of the arrangement described herein is a detector wherein, if no a-priori information is available from an outer decoder, the detector achieves optimal or near-optimal max-log performance using two or more than two transmit antennas respectively. Conversely, if a-priori information is fed back to the detector from an outer decoder, then the detector provides a high performance and computationally efficient iterative or "turbo" scheme including the detector, acting as "inner" module, the outer decoder, and optionally an interleaver and related deinterleaver. Optionally, all, or part of the layers (or antennas, or sources) considered for the detection can be ordered employing properly devised techniques.

In brief, an embodiment of the arrangement described herein provides a simplified yet near-optimal method to compute equation (6), and therefore equation (7): *i.e.*, it finds subsets of $s_+^k$ ($s_-^k$) with much lower cardinality and allowing a close approximation of the final result (6).

A possible embodiment of the arrangement described herein overcomes the limitations of the prior arrangements discussed in the foregoing, by means of a detector for multiple antenna communications that detects sequences of digitally modulated symbols transmitted by multiple antennas, or sources, processes "a-priori" input bit soft information output by an outer decoder, and generates "extrinsic" bit soft-output information to be passed back to an external decoder. The decoder is thus in position to generate improved "a-priori" information to be fed back to the detector for a further "iteration". The process ends after a given number of loops or iterations are completed.

A possible embodiment of the arrangement described herein concerns a detector comprising several stages adapted to operate, for example, in the complex or real domain, respectively. Firstly, by operating in the real domain only, the system is translated into the real domain through a novel lattice representation. Then, the (real or complex) channel matrix undergoes a "triangularization" process, meaning that through proper processing it is factorized in two or more product matrices of which one is triangular. Finally, the maximization problems expressed by equation (6) above is approximated by using two basic concepts: (a) determining a suitable subset of all the possible transmit sequences; (b) performing an approximate maximization of the two terms in (6) through separately maximizing the two metrics ($-D_{ED}$) and $D_a$ (4) over suitably selected reduced sets of transmit sequences.

The basic idea to maintain low complexity is to resort to the principle of successive layer detection, or spatial DFE (Decision-Feedback Equalization), but taking into account in addition also the information provided by the a-priori metric $D_a$. No other near-MAP detectors able to efficiently process $D_a$ have been proposed. Again, additionally, and optionally, all or part of the layers considered for the detection can be ordered employing a properly designed layer ordering technique.

Overall, an embodiment of the arrangement described herein achieves optimal max-log ML performance for two transmit antennas if no a-priori information is available from an outer decoder, and near-optimal for more than two transmit antennas. If a-priori information is available from the decoder, an embodiment of the invention computes near-optimal bit APPs to be passed to an external decoder. In all cases, the embodiment yields performance very close to that of the optimum MAP (ML if no a-priori information is available at the input of the detector) and has a much lower complexity as compared to a MAP (or ML) detection method and apparatus, and to the other state-of-the-art detectors having near-MAP (near-ML) performance. If more than two transmit sources are present, the order of all, or part of, the layers considered for detection may affect the performance significantly.

Advantageously, an embodiment described herein involves ordering all, or part of, the sequence of layers considered for the detection process.

This embodiment is thus suitable for highly parallel hardware architectures, and is thus adapted for VLSI implementations and for applications requiring a real-time (or in any case low latency) response.

Specifically, this embodiment concerns a combined detector and decoder of multiple antenna communications, that exchange specific quantities (*extrinsic* and *a-priori* soft information, often in the logarithmic domain, LLRs) in an iterative fashion. The iterative detector can be implemented in hardware (HW) according to several different architectures.

At a general level, it is intended that at least the three following options are considered as possible HW implementations for an embodiment of the present invention:

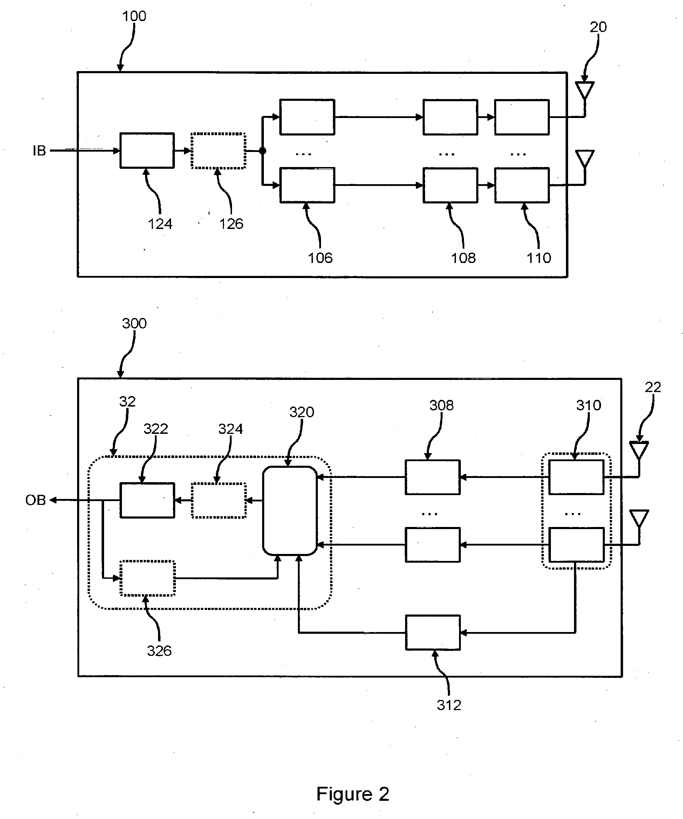

1) data re-circulation using one HW instantiation of the loop depicted in **FIG. 2** can be performed at a higher frequency clock than the output data rate required by the considered application;

2) a pipelined HW structure built by cascading several instantiations, one per each iteration, of the series of inner detector, optional deinterleaver, outer decoder, optional interleaver; the block diagram is depicted in **FIG. 2**. Compared to the above reported HW structure: if N is the number of iterations, for a same clock frequency, N times higher speed (i.e., data rate) can be achieved at the expense of N times HW complexity;

3) any combination of the above reported HW structures.

Additionally and optionally, all - or part of - the layers considered for the detection can be ordered employing a suitably designed ordering technique. An embodiment of the layer ordering method includes the following sequence of steps, to be repeated a given number of times according to the implemented ordering technique: permuting pairs of columns of the channel matrix; pre-processing the permuted channel matrix in order to factorize it into product terms of which one is a triangular matrix; based on the processed channel coefficients, defining and properly computing the post-processing SNR for the considered layers; based on the value of the aforementioned SNRs, determining the order of the layers by applying a given criterion.

In an embodiment the number of receiving antennas is equal to the number of transmitting antennas minus one. In this case, the complex channel state information matrix **H** might be processed by factorizing the channel state information matrix **H** into an orthogonal matrix and a triangular matrix with its last row eliminated.

Brief Description Of The Drawings

For a more complete understanding of this disclosure and its features, reference is now made to the following description of exemplary embodiments, taken in conjunction with the accompanying drawings.

**FIGS. 1A** and **1B** illustrate example systems for detecting communications from multiple sources in accordance with this disclosure.

**FIG. 2** illustrates a typical single-carrier MIMO transmitter and related receiver in accordance with this disclosure.

**FIG. 3** illustrates a typical MIMO-OFDM transmitter and related receiver in accordance with this disclosure.

**FIGS. 4A** and **4B** illustrate example of two alternative single-carrier methods for computing a-posteriori soft-output information of multiple sources adapted for use in accordance with this disclosure.

**FIGS. 5A** and **5B** illustrate example of two alternative OFDM methods for computing a-posteriori soft-output information of multiple sources for use in accordance with this disclosure.

**FIGS. 6A** and **6B** illustrate example methods for detecting communications from multiple sources in accordance with this disclosure.

Detailed Description

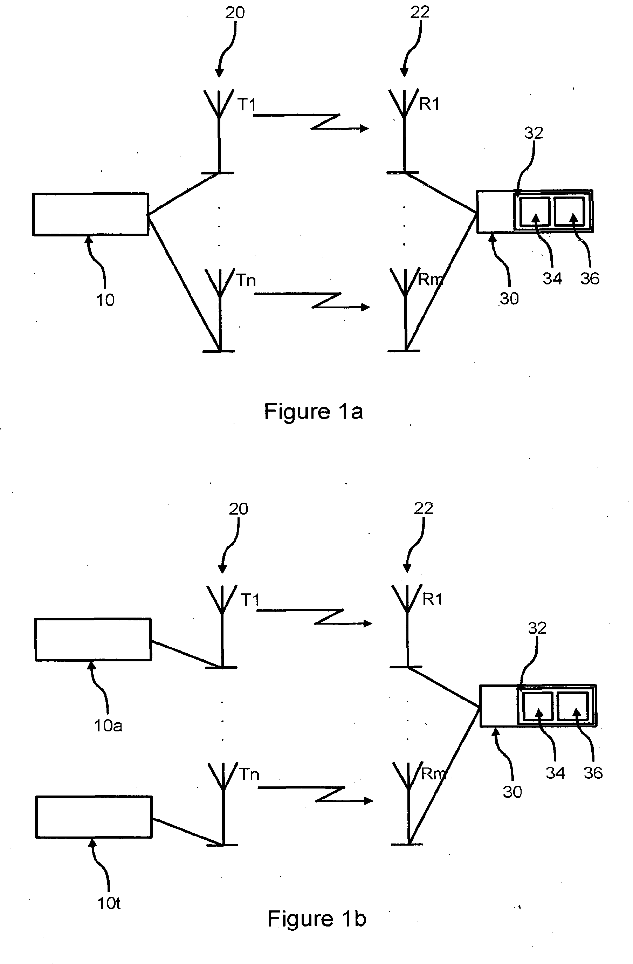

**FIGS. 1A** through **6B** and the various embodiments described in this disclosure are by way of illustration only and should not be construed in any way to limit the scope of the invention. Those skilled in the art will recognize that the various embodiments described in this disclosure may easily be modified and that such modifications fall within the scope of this disclosure.

**FIGS. 1A** and **1B** illustrate exemplary systems for detecting multiple communication sources in accordance with this disclosure. In particular, **FIGS. 1A** and **1B** illustrate example MIMO systems. These embodiments are for illustration only. Other embodiments of the systems could be used without departing from the scope of this disclosure.

As shown in **FIG. 1A,** the system includes a transmitter **10** and a receiver **30.** The transmitter **10** includes or is coupled to multiple transmit antennas **20** (denoted T1-Tn), and the receiver **30** includes or is coupled to multiple receive antennas **22** (denoted R1-Rm). Typically, each receive antenna **22** receives signals from all of the transmit antennas **20,** and where m is the number of receive antennas and $n$ is the number of transmit antennas, m ≥ n-1 in an embodiment.

As shown in **FIG. 1B,** the system could also include multiple transmitters **10a-10t** and the receiver **30.** In this example, each of the transmitters **10a-10t** includes or is coupled to a single transmit antenna **20.**

Each of the transmitters **10, 10a-10t** in **FIG. 1A** and **1B** represents any suitable device or component capable of generating or providing data for communication. The receiver **30** represents any suitable device or component capable of receiving communicated data.

In these examples, the receiver **30** includes an iterative detector and decoder **32,** which detects multiple communications from multiple sources and computes a-posteriori soft-output information. The multiple sources could include a single transmitter **10** with multiple antennas **20,** multiple transmitters **10a-10t** with one or several antennas **20** each, or a combination thereof. The iterative detector and decoder **32** may operate as described in more detail below.

The block **32** includes any hardware, software, firmware, or combination thereof for detecting multiple communications from multiple sources. The block **32** could be implemented in any suitable manner, such as by using an Application Specific Integrated Circuit ("ASIC"), Field Programmable Gate Array ("FPGA"), digital signal processor ("DSP"), or microprocessor. As a particular example, the block **32** could include one or more processors **34** and one or more memories **36** capable of storing data and instructions used by the processors **34.**

Either of the systems can be represented as in equation (1) above, which may be valid for both single-carrier flat fading MIMO systems and for wideband OFDM systems (per subcarrier). The interpretation of equation (1) is that the signal received at each antenna **22** by the receiver **30** represents the superposition of $T$ transmitted signals corrupted by multiplicative fading and AWGN.

Although **FIG. 1A** and **1B** illustrate examples of systems for detecting multiple communication sources, various changes may be made to **FIGS. 1A** and **1B.** For example, a system could include any number of transmitters and any number of receivers. Also, each of the transmitters and receivers could include or be coupled to any number of antennas.

**FIG. 2** illustrates a more detailed example of a single carrier MIMO transmitter and receiver. Typical transmitter baseband digital elements/procedures are grouped as **100.** As a counterpart, block **300** represents typical baseband elements/procedures of a receiver.

In particular, an embodiment of the iterative detection and decoder **32 (FIG. 1)** includes as distinguishable units a MIMO detector **320,** a deinterleaver **324,** a FEC decoder **322** and an interleaver **326.** Interleaver **326** is implemented according to the same permutation law as interleaver **126,** the latter being at the transmitter side, with the difference that the interleaver **126** has (hard-decision) bit input/ouput, while the interleaver **326** has soft bit information input/output. Deinterleaver **324** implements the reciprocal permutation law of blocks **126** and **326.** Blocks **324** and **326** are optionally present as components of block **32.**

As well known to those skilled in the art, the block **100** further has associated there with a FEC encoder **124,** and a set of mapper blocks **106,** filter blocks **108** and digital-to-analog (D/A) converters **110** in order to convert an input bit stream IB for transmission over the set of transmission antennas **20.**

Similarly the block **300** has additionally associated there with a set of analog-to-digital (A/D) converters **310** and filter blocks **308** for each of the antennas **22** of the receiver, providing the received data to the detector **32,** which creates the final output bit stream OB. Again those skilled in the art will appreciate the presence of a channel estimator **312** in the receiver block **300,** which provides respective channel estimation data to the MIMO detector **320.** Any channel estimator may be used, and any forward error correction (FEC) code might be used in the FEC encoder **124** and FEC decoder **326,** such as Reed-Solomon, convolutional, low-density parity check code, and turbo encoding schemes.

Again, these embodiments are for illustration only. Other embodiments of the systems **100, 300** and **32** may be used without departing from the scope of this disclosure.

The deinterleaver **324** and the interleaver **326** are optional in the sense that their usefulness depends on the adopted error correction code. In some cases they could be eliminated without impairing the performance of the receiver.

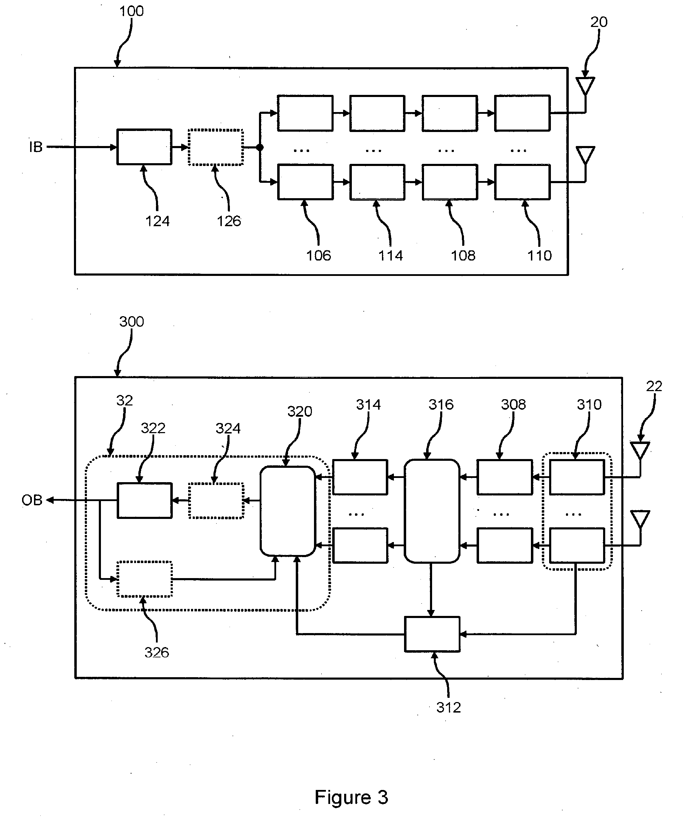

**FIG. 3** illustrates an alternative embodiment of a MIMO-OFDM transmitter and receiver. Again, typical transmitter baseband digital elements/procedures are grouped as **100** and typical receiver baseband elements/procedures are grouped as **300.**

In particular, the iterative detection and decoder **32** typically includes as distinguishable units a MIMO-OFDM detector **320,** a deinterleaver **324,** a FEC decoder **322** and an interleaver **326.** Interleaver **326** is implemented according to the same permutation law as **126,** the latter being at the transmitter side, with the difference that the interleaver **126** has (hard-decision) bit input/ouput, while the interleaver **326** has soft bit information input/output. Deinterleaver **322** implements the reciprocal permutation law of **126** and **326.**

In comparison to the transmission system of **FIG. 2,** the system of **FIG. 3** further includes a set of framing and OFDM modulator blocks **114** at the transceiver side and the respective OFDM demodulator and deframing blocks **314**

at the receiver side. As well known to those skilled in the art a typical receiver further includes a synchronisation block *316* for improving the channel estimation by the block *312.*

Blocks *324* and *326* are optionally present as components of *32.*

In the following will be explained embodiments of single-carrier and OFDM transmission systems, with particular attention being paid to the presence of the interleaver *326* and the deinterleaver *324.* Once again, these embodiments are for illustration only. Other embodiments of the systems *100, 300* and specifically *32* could be used without departing from the scope of this disclosure.

Two general block diagrams, alternative to each other, are represented in **FIGS. 4A** and **4B.**

The deinterleaver *324* and the interleaver *326* are optional in the sense that their usefulness depends on the adopted error correction code. In fact, **FIG. 4B** shows the same iterative loop as of **FIG. 4A,** however, without the interleaver *326* and deinterleaver *324.* In some cases they could be eliminated without impairing the performance of the receiver.

The detector *320* receives as input the received signal **Y,** as shown, e.g., in equation (1), the channel estimates, such as the channel estimation matrix **H** as shown in equation (1), and the a-priori bit soft information, such as the a-priori bit LLRs $L_a$, and then approximates internally the a-posteriori LLRs $L_p$ and outputs the extrinsic information $L_e$. Unless otherwise stated, the bit soft-output generation will be referred to in the logarithmic domain with no loss of generality, *i.e.*, it is intended the ideas will remain valid if other implementation choices are made, i.e., of regular probabilities instead of LLRs are dealt with.

More specifically, **FIGS. 4A** and **4B** illustrate two alternative methods to implement the single carrier MIMO iterative detector and decoder *32.* The MIMO detector *320* in both figures receives as input the received sequence **Y** and the estimated CSI **H.**

**FIG. 4A** uses a deinterleaver *324* having as input the bit soft-output information output by the MIMO detector *320,* and a reciprocal interleaver *326* having as input the bit soft-output information output by a SISO FEC decoder *322.*

The flow is repeated for a given number of iterations and the decoder *322* determines the final output bit stream OB.

**FIG. 4B** is the same as **FIG. 4A** except that the deinterleaver *324* and the reciprocal interleaver *326* are not present.

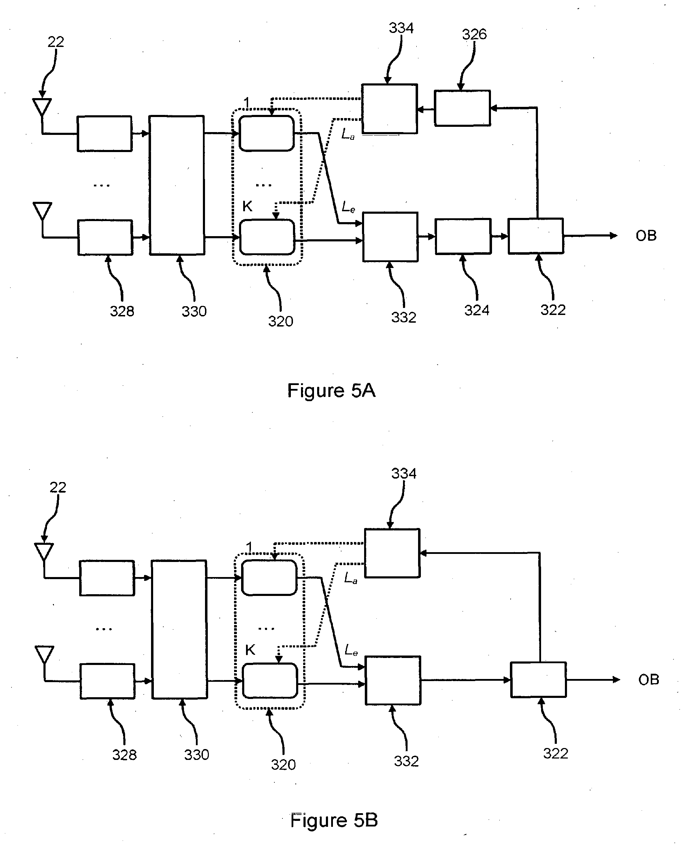

**FIGS. 5A** and **5B** illustrate two alternative methods to implement the MIMO-OFDM iterative detection and decoder *32.*

The MIMO detector *320* in both figures receives as input the received sequence **Y** and the estimated CSI **H** relatively to a set of OFDM subcarriers.

As well known to those skilled in the art, the data coming from the R antennas *22* of the receiver can be converted into the K OFDM subcarriers, *e.g.*, by means of a set of Fast Fourier Transformation (FFT) blocks *328* and a multiplexer *330.* The single-carrier case of **FIGS. 2, 4A** and **4B** can be considered as a special case of such a system when K = 1.

At least one detector block *320* then processes the *K* OFDM subcarriers. This can be done serially, in parallel by means of K detector blocks or any combination of both. The parallel structure represented in **FIGS. 5A** and **5B** is considered as an example only and is not limiting.

The outputs of the detector units *320* are then serialized by means of the parallel to serial (P/S) converter block *332.*

**FIG. 5A** uses a deinterleaver *324* having as input the bit soft-output information output by the converter block *332,* and a reciprocal interleaver *326* having as input the bit soft-output information output by a SISO FEC decoder *322.*

The output of the interleaver *326* is demultiplexed by a serial to parallel (S/P) converter block *334* and fed back to the detector units *320* according to the OFDM subcarriers the soft bits output by *334* belong to. The flow is repeated for a given number of iterations and the decoder *322* provides the output bit stream OB.

**FIG. 5B** shows the same scheme as **FIG. 5A** except that the deinterleaver *324* and the reciprocal interleaver *326* are not present.

Unless otherwise stated, the description herein deals with probability ratios in the logarithmic domain, *i.e.*, LLRs represent the input-output soft information, but the same ideas and procedures can be generalized in a straightforward manner to the case of regular probabilities.

As indicated, the arrangement described herein deals with a simplified yet near-optimal method to compute equation (6), and therefore equation (7). Namely, at each iteration the arrangement finds subsets of $s_+^k$ ($s_-^k$), which have a reduced cardinality and which allow an approximation of the final result of equation (6).

The arrangement described herein deals with the problem of bit soft output generation as a function of the candidate symbols transmitted in turn by each transmit antenna. This means that even if for the sake of conciseness the following embodiments are described with reference to a generic transmit antenna t, the related processing is intended to be repeated for T times with $t$ = 1,...$T$ respectively.

More precisely, generating bit soft-output information for the bits corresponding to the symbols transmitted by all the antennas (or sources) comprises repeating the considered steps and operations a number of times equal to the number of transmit antennas (or sources), each time associated with a different disposition of layers corresponding to the transmitted symbols, each layer being a reference layer in only one of the dispositions, and disposing the columns of the channel matrix accordingly prior to further processing. The meaning of 'reference layer' will be clear from the following descriptions.

In other words the arrangement determines overall T subsets $U_t$ of the entire possible transmitted symbol sequence set. Each subset has per iteration cardinality $WS_C$, with $S_C \leq 2^{Mc}$, instead of $2^{TMc}$ of the whole set.

$W$ depends upon the chosen embodiment. It can be kept constant (*i.e.*, independent of $T$) in some embodiments, thus resulting in a complexity of the demodulation that linearly grows with $T$, instead of exponentially growing.

The entire process is repeated for a number of stages (or iterations), wherein a modified version of the a-priori LLRs $L_a$ is output by decoder at each iteration. At each iteration, the detector processes the a-priori LLRs $L_a$ and subtracts them from $L_p$ of equation (6) to compute equation (7).

In order to compute the bit LLRs corresponding to transmit antenna t a suitable set of transmit sequences **X** can be generated as will be explained in the following. The following description refers to a single iteration and it is to be understood that said extrinsic information ($L_e$) is calculated preferably in at least two processing instances (*i.e.* stages, or iterations) by:

- calculating in a first instance the extrinsic information ($L_e$) without any a-priori information ($L_a$), and
- calculating in a second instance the extrinsic information ($L_e$) from the a-priori information ($L_a$) fed back from a module such as a forward error correction code decoder, until a decision on the bit value is made after a given number of instances.

It should be understood that the term iterations or stages are exchangeable, because the arrangement could be implemented by a single detector and decoder block iterating on the various data or by several detector and decoder blocks being connected in a cascaded structure such as, *e.g.,* a pipelined structure.

The complex modulated symbol $X_t$ spans all the possible (QAM or PSK) complex constellations **S,** or a properly selected subset thereof, denoted by **C,** with cardinality $S_C$.

Said symbol $X_t$ represents a reference transmit symbol, and its possible values represent *candidate values* to be used in the demodulation scheme.

For each of the $S_c$ possible values $X_t = \overline{X}$, as many corresponding sets of transmit sequences X, denoted with $U_t(\overline{X})$, are determined.

Each said set of sequences of transmitted symbols $U_t(\overline{X})$ is then obtained by grouping together (*i.e.* listing in sequences of T symbols each) the candidate value of the reference symbol, $X_t = \overline{X}$, and at least one further set of estimated sequences of the remaining (i.e. other than the candidates) transmitted symbols.

How to estimate such sequences is detailed in the exemplary embodiments.

It should be remarked that in order to include all possible **X** one should have:

$$U_t = \left\{ \bigcup_{\forall \overline{X} \in \mathbf{S}} U_t(\overline{X}) \right\}$$

where $U_t(\overline{X}) = \{\mathbf{X} : X_t = \overline{X}\}$. A basic property of an embodiment of the invention instead is to build sets of sequences $U_t$ such that they maintain a low cardinality, at the same time without impairing significantly the performance of the MAP detector. The final set $S_t$ used to compute bit LLRs relative to $X_t$ is then built by choosing those elements in $U_t$ maximizing equation (4), *i.e.*:

$$S_t(\overline{X}) = \arg \max_{\mathbf{X} \in U_t(\overline{X})} D(\mathbf{X}) \tag{8}$$

and

$$S_t = \left\{ \bigcup_{\forall \overline{X} \in \mathbf{C}} S_t(\overline{X}) \right\} \tag{9}$$

Those skilled in the art will appreciate that calculating $D(\mathbf{X})$ for $\mathbf{X} \in U_t(\overline{X})$ means calculating a metric for each of said set of sequences of transmitted symbols $U_t(\overline{X})$. Similarly, solving equation (8) means selecting the sequence that maximizes the metric $D(\mathbf{X})$, one for each candidate value ($S_t(\overline{X})$), and storing $S_t$ and $D(\mathbf{X})$ for $\mathbf{X} = S_t(\overline{X})$ means storing the value of the maximum related metric and the associated selected sequence.

Moreover, calculating $D(\mathbf{X})$ according to equation (4) in particular means calculating an a-posteriori probability metric, that also includes the steps of summing the opposite of an Euclidean distance term to the a-priori probability term for the selected candidate sequences **X.**

Actually, it is not computationally expensive and may offer significant performance improvements to consider also the sequences **X** belonging to the other sets $S_j$ with $j{\neq}t$ when computing bit LLRs relative to $X_t$. Mathematically this means that instead of $S_t(\overline{X})$ the modified set $S'_t(\overline{X})$ can be used instead:

$$S'_t(\overline{X}) = \left\{ \underset{\mathbf{X} \in U_t(\overline{X}) \; OR \; \mathbf{X} \in S_{j \neq t} : X_t = \overline{X}}{\arg \max} D(\mathbf{X}), \qquad \forall \overline{X} \in \mathbf{C} \right\} \qquad (10)$$

and

$$S'_t = \left\{ \bigcup_{\forall \overline{X} \in \mathbf{C}} S'_t(\overline{X}) \right\} \qquad (11)$$

In the following, it is understood that the embodiments equally apply to both $S_t$ as shown in equation (9) and $S_t'$ as shown in equation (11) though reference will be made to $S_t$ only to simplify the notation.

It should be remarked that a hard-decision estimate of the sequence **X** could then be obtained as:

$$\hat{\mathbf{X}}^t = \underset{\overline{X} \in \mathbf{C}}{\arg \max} \left\{ D(S_t(\overline{X})) \right\} \qquad (12)$$

Finally, an embodiment of the invention approximates equation (6) at every iteration using an updated version of the metric $D(\mathbf{X})$, through:

$$L_{P,i} \cong \underset{\mathbf{X} \in S_t^j(1)}{\max} D(\mathbf{X}) - \underset{\mathbf{X} \in S_t^j(0)}{\max} D(\mathbf{X}) \qquad (13)$$

where $S_t^j(1)$ and $S_t^j(0)$ are a set partitioning of $S_t$:

$$S_t^j(a) = \left\{ \mathbf{X} \in S_t : b_{M_c(t-1)+j}(\mathbf{X}) = a \right\}, \qquad a = \{0,1\}, \qquad (14)$$

and where $t$ is the $t$-th antenna with $1 \le t \le T$, $j$ the $j$-th bit in the modulated symbol with $1 \le j \le M_c$, and $i$ denotes the $i$-th bit in the sequence output by the detector with $i = M_c(t$-1$)+j$.

Those skilled in the art will appreciate that calculating equation (13) corresponds to calculating a-posteriori bit soft output information ($L_p$) for the selected sequences (**X**) from the set of metrics for the sequences $D(\mathbf{X})$.

In the following, are described methods and apparatuses to choose $S_t$ with reduced complexity compared to the Max-Log-MAP detector and maintaining at the same time a near-optimal performance.

A first embodiment foresees suitable channel pre-processing to translate the system equation (1) into an equivalent one. The procedure is comprised of the distinct stages described in the following.

Channel Processing and Demodulation

In order to decouple the problem in turn for the different transmit antennas and efficiently determine $U_t$ it is useful to perform a channel matrix "triangularization" process, meaning that through proper processing it is factorized in two or more product matrices one of which is triangular. It is understood that different matrix processing may be applied to **H**. Examples include, but are not limited to, QR and Cholesky decomposition procedures [30].

It is known that performing a Cholesky decomposition of complex channel state information matrix includes:

- forming a Gram matrix using the channel state information matrix;
- performing a Cholesky decomposition of the Gram matrix, and
- calculating the Moore-Penrose matrix inverse of the channel state information matrix, resulting in a pseudoinverse matrix.

This pseudoinverse matrix may then be used to process a complex vector of received sequences of digitally modulated symbols by multiplying the pseudoinverse matrix by the received vector.

In the following the alternative QR decomposition will be used, without loss of generality.

To simplify computations, a permutation matrix $\pi(t)$ is introduced, which circularly shifts the elements of **X** (and consequently the order of the columns of **H,** too), such that the symbol $X_t$ under investigation moves to the last position:

$$\mathbf{\Pi}_t = \begin{bmatrix} \mathbf{U}_{t+1} & \cdots & \mathbf{U}_T & \mathbf{U}_1 & \cdots & \mathbf{U}_t \end{bmatrix}^T \tag{15}$$

where $\mathbf{U}_t$ is a column vector of length T with all zeros but the t-th element equal to one. Then equation (1) can be rewritten as:

$$\mathbf{Y} = \mathbf{H}\mathbf{\Pi}_t^{-1}\mathbf{\Pi}_t\mathbf{X} + \mathbf{N} = \mathbf{H}\mathbf{\Pi}_t^{T}\mathbf{\Pi}_t\mathbf{X} + \mathbf{N} \tag{16}$$

The arrangement entails processing $T$ systems (16) characterized by $T$ different dispositions of layers corresponding to the transmitted symbols, each layer being a reference layer in only one of the dispositions, and disposing the columns of the channel matrix accordingly prior to further processing.

Specifically, $T$ different QR decompositions have to be performed, one for each $\Pi_t$:

$$\mathbf{H}\mathbf{\Pi}_t^{T} = \mathbf{Q}_t\mathbf{R}_t \tag{17}$$

where $\mathbf{Q}_t$ is an orthonormal matrix of size $RxT$ and $\mathbf{R}_t$ is a TxT upper triangular matrix.

The ED metrics in equation (4) can be equivalently rewritten as:

$$\begin{aligned} D_{ED} &= \frac{1}{N_0}\left\|\mathbf{Y} - \mathbf{H}\mathbf{X}\right\|^2 = \frac{1}{N_0}\left\|\mathbf{Y} - \mathbf{Q}_t\mathbf{R}_t\mathbf{\Pi}_t\mathbf{X}\right\|^2 \\ &= \frac{1}{N_0}\left\|\mathbf{Q}_t^H\mathbf{Y} - \mathbf{R}_t\mathbf{\Pi}_t\mathbf{X}\right\|^2 = \frac{1}{N_0}\left\|\mathbf{Y}'_t - \mathbf{R}_t\mathbf{X}'_t\right\|^2 \end{aligned} \tag{18}$$

where $\mathbf{Y}'_t = \mathbf{Q}_t^H\mathbf{Y}$ and $\mathbf{X}'_t = \Pi_t\mathbf{X}$.

It should be noticed that no change in the noise statistics is introduced by the QR decomposition in the equivalent noise term $\mathbf{N}'_t = \mathbf{Q}_t^H\mathbf{N}$.

Calculating equation (18) might be performed by calculating the Euclidean distance term between the received vector and the product of the channel state information matrix (**H**) and a possible transmit sequence (**X**).

It is useful to enumerate the rows of $\mathbf{R}_t$ from top to bottom and create a correspondence with the different transmit antennas (or *layers*), ordered as in $\mathbf{X}'_t$. Then the QAM symbol $X_t$ is located in the $T$-th position of $\mathbf{X}'_t$ and corresponds to the last row of $\mathbf{R}_t$, which acts as an equivalent triangular channel. The demodulation principle is to select the $T$-th layer as the reference one and determine for it a list of candidate constellation symbols. Then, for each sequence in the list, interference is cancelled from the received signal and the remaining symbol estimates are determined through interference nulling and cancelling, or spatial DFE. Exploiting the triangular structure of the channel, the estimation of the remaining T-1 complex symbols can be simply implemented through a slicing operation to the closest QAM (or PSK) constellation symbol, thus entailing a negligible complexity. This process can be called root conditioning. In order to compute reliable bit soft-output information the process needs to be repeated $T$ times for $T$ QR decompositions according to equations (15)-(18). More details can be found in [21].

As an example, in the following the process is described for $T=2$ transmit and $R$ receive antennas. After the QR decomposition one has:

$$\mathbf{Y}_2' = \begin{bmatrix} Y_1 \\ Y_2 \end{bmatrix}, \quad \mathbf{R}_2 = \begin{bmatrix} r_{1,1} & r_{1,2} \\ 0 & r_{2,2} \end{bmatrix}, \quad \mathbf{X}_2' = \begin{bmatrix} X_1 \\ X_2 \end{bmatrix} \tag{19}$$

Then from equation (4) and (18) follows:

$$\begin{aligned} D_{ED} &= \frac{1}{N_0} \left\| \mathbf{Y}_2' - \mathbf{R}_2 \mathbf{X}_2' \right\|^2 \\ &= \frac{1}{N_0} \left( \left| Y_2 - r_{2,2} X_2 \right|^2 + \left| Y_1 - r_{1,1} X_1 - r_{1,2} X_2 \right|^2 \right) \end{aligned} \tag{20}$$

Under the hypothesis that $X_2 = \overline{X}$ has been transmitted, $X_1$ which minimizes the distance between $\mathbf{Y}$ and $\mathbf{H} \cdot [X_1 \ X_2]^T$ can be found through thresholds, $i.e.$, slicing to the closest constellation element (denoted in formulas through the "round" function):

$$\begin{aligned} \hat{X}_1 \left( \overline{X} \right)_{\mathbf{x}:(x_2 = \overline{x})} &= \arg \min \left\| \mathbf{Y}_2' - \mathbf{R}_2 \mathbf{X}_2' \right\|^2 \\ &= \arg \min_{X_1} \left| Y_1 - r_{1,1} X_1 - r_{1,2} \overline{X} \right|^2 \\ &= \operatorname*{round}_{X_1 \in \mathbf{C}} \left( \frac{Y_1 - r_{1,2} \overline{X}}{r_{1,1}} \right) \end{aligned} \tag{21}$$

If $L_{a,i} = 0$, with $i = 1,...,TM_c$, the hard-output ML sequence can then be determined as

$$\left\{ \hat{X}_1, \hat{X}_2 \right\} = \arg \max_{X_2 \in \mathbf{C}} \left[ - D_{ED} \left( \hat{X}_1(X_2), X_2 \right) \right] \tag{22}$$

where $\mathbf{S}$ spans the whole set of complex constellation symbols. Thus the complexity of the ML detector is reduced from $2^{2M_c}$ to $2^{M_c}$ sequences to be searched. The same demodulation principle can be used to compute optimal max-log LLRs for the bit corresponding to symbol $X_2$ as:

$$L_{p,i} = \max_{\mathbf{x} \in S_2^j(1)} \left[ - D_{ED} \left( \hat{X}_1(X_2), X_2 \right) \right] - \max_{\mathbf{x} \in S_2^j(0)} \left[ - D_{ED} \left( \hat{X}_1(X_2), X_2 \right) \right] \tag{23}$$

where $1 \le j \le M_c$, $i = M_c + j$ denotes the $i$-th bit in the sequence output by the detector, and $S_2^j(1)$, $S_2^j(0)$ are a set partitioning of $S_2$:

$$S_2^j(a) = \left\{ \mathbf{X} \in S_2 : b_{M_c+j} = a \right\}, \qquad a = \{0,1\} \qquad (24)$$

Similarly, an equivalent system can be derived:

$$\mathbf{Y}_1' = \begin{bmatrix} Y_1' \\ Y_2' \end{bmatrix}, \qquad \mathbf{R}_1 = \begin{bmatrix} r_{1,1}' & r_{1,2}' \\ 0 & r_{2,2}' \end{bmatrix}, \qquad \mathbf{X}_1' = \begin{bmatrix} X_2 \\ X_1 \end{bmatrix} \qquad (25)$$

$$
\begin{aligned}
D_{ED} &= \frac{1}{N_0} \left\| \mathbf{Y}_1' - \mathbf{R}_1 \mathbf{X}_1' \right\|^2 \\
&= \frac{1}{N_0} \left( \left| Y_2' - r_{2,2}' X_1 \right|^2 + \left| Y_1' - r_{1,1}' X_2 - r_{1,2}' X_1 \right|^2 \right)
\end{aligned} \qquad (26)
$$

and

$$
\begin{aligned}
\hat{X}_2(\overline{X})_{\mathbf{x}:(x_1=\overline{x})} &= \arg \min \left\| \mathbf{Y}_1' - \mathbf{R}_1 \mathbf{X}_1' \right\|^2 \\
&= \arg \min_{X_2} \left| Y_1' - r_{1,1}' X_2 - r_{1,2}' \overline{X} \right|^2 \\
&= \operatorname*{round}_{X_2 \in \mathbb{C}} \left( \frac{Y_1' - r_{1,2}' \overline{X}}{r_{1,1}'} \right)
\end{aligned} \qquad (27)
$$

Finally, max-log LLRs for the bit corresponding to symbol $X_1$ can be computed as:

$$L_{p,i} = \max_{\mathbf{X} \in S_1^j(1)} \left[ - D_{ED}\left( \hat{X}_2(X_1), X_1 \right) \right] - \max_{\mathbf{X} \in S_1^j(0)} \left[ - D_{ED}\left( \hat{X}_2(X_1), X_1 \right) \right] \qquad (28)$$

where $1 \leq j \leq M_c$.

If more $T > 2$ antennas are considered the hard-output sequence and the (max-log) LLRs are not optimal because of error propagation through the layers from $T$-1 to 1.

The Distance and A-Priori Criteria

In the following, two different criteria to select the elements of $U_t(\overline{X})$ are described.

It is understood that equivalent approaches can be used, which is representative of an approach adapted to be indicated as a Turbo-Layered Orthogonal Lattice Detector (briefly T-LORD).

How to choose the elements $\mathbf{X}$, to be included into each set $U_t(\overline{X})$ will now be discussed.

A Max-Log-Map detector according to equation (6) is able to determine those two symbols (with a certain bit equal to one or zero) which maximize the metric D(X) by considering all possible transmitted sequences, i.e., at the expense of a prohibitive complexity. In this first embodiment, the T-LORD detector instead computes equation (13), i.e., selects two subsets of sequences $S_1^j(1)$, $S_1^j(0)$ as shown in equation (14) by separately maximizing $-D_{ED}$ and $D_a$:

$$\mathbf{X}^D = \arg \max_{\mathbf{x}}(-D_{ED}) = \arg \min_{\mathbf{x}} \left\| \mathbf{Y} - \mathbf{H}\mathbf{X} \right\|^2 = \arg \min_{\mathbf{x}} D_{ED} \qquad (29)$$

$$\mathbf{X}^A = \arg\max_{\mathbf{x}} \sum_{i=1}^{T \cdot M_c} b_i(\mathbf{x}) \frac{L_{a,i}}{2} \qquad (30)$$

where $b_i = \{\pm 1\}$ and $L_{a,i}$ represent the a-priori LLRs for the $i$-th bit of the transmit sequence **X**.

Those skilled in the art will appreciate that considering $\mathbf{X}^D$ means selecting as one candidate sequence of the possible transmitted symbols the transmitted sequences with the smallest value of the Euclidean distance term and considering $\mathbf{X}^A$ means selecting as further candidate sequence of the remaining transmit symbols the transmit sequence with the largest a-priori information ($L_a$) of the symbol sequence.

It should be noted that equation (29) is computed only once while equation (30) is updated for every iteration, as the a-priori LLRs $L_{a,i}$ change from one iteration to the other. In other words, this technique separately searches for the closest and the most a priori likely transmitted sequences, and approximates the joint maximization of equation (4) through separate maximization of ($-D_{ED}$) and $D_a$. Using the terminology introduced in equation [22] for a different procedure, similarly equations (29) and (39) obey the *distance* and a priori criteria respectively.

As a further step, the arrangement described herein also involves a method to reduce the complexity of equation (29) and (30) by decoupling the search of the candidate sequences **X** for the different transmit antennas. As mentioned above, the complex modulated symbol $X_t$ spans all the possible (QAM or PSK) constellation symbols, or a properly selected subset C. For each $X_t = \overline{X}$ value corresponding groups of transmit sequences **X,** denoted with $U_t(\overline{X})$, are determined considering both $\mathbf{X}^D$ and $\mathbf{X}^A$ i.e.:

$$U_t(\overline{X}) = \left\{ \mathbf{X}^D(X_t = \overline{X}), \quad \mathbf{X}^A(X_t = \overline{X}) \right\} \qquad (31)$$

The technique drastically reduces the cardinality of the max-log-MAP detector by overall considering T sets $U_t$, with $t = 1, ..., T$. If the cardinality of $U_t(\overline{X})$ is kept low and independent of $T$, the complexity of the approximated max-log-MAP detector is linear versus $T$, instead of the exponential dependence $2^{TM_c}$.

The sequence $\mathbf{X}^D$ from equation (29) can be estimated according to the guidelines described in the former sections and in [21], namely performing a channel triangularization (for example a QR decomposition) and root conditioning as described by equations (18), (21) and (27). It is noted that [21] does not foresee processing a-priori information differently from the disclosed technique, which represents a very significant improvement of it.

From equation (18) follows:

$$\begin{aligned} D_{EL} &= \frac{1}{N_0} \left\| \mathbf{Y}_t' - \mathbf{R}_t \mathbf{X}_t' \right\|^2 \\ &= \frac{1}{N_0} \left( \left| Y_1^t - r_{1,1}^t X_1^t - \sum_{k=2}^{T} r_{1,k}^t X_k^t \right|^2 + \left| Y_2^t - r_{2,2}^t X_2^t - \sum_{k=3}^{T} r_{2,k}^t X_k^t \right|^2 \right. \\ &\quad \left. + \ldots \ldots + \left| Y_T^t - r_{T,T}^t X_t^t \right|^2 \right) \end{aligned}$$

$$(32)$$

According to equation (32), for every $X_t = \overline{X}$ the conditional decoded values of $X_1^t, \ldots X_{T-1}^t$, are determined recursively according to a spatial DFE principle as:

$$\hat{X}^{t\ D}_{T-1}\left(\overline{X}\right) = round\left(\frac{Y^t_{T-1} - r^t_{T-1,T}\overline{X}}{r^t_{T-1,T-1}}\right)$$

$$\vdots$$

$$\hat{X}^{t\ D}_{1}\left(\overline{X}\right) = round\left(\frac{Y^t_1 - \sum_{k=2}^{T-1} r^t_{1,k}\hat{X}^{t\ D}_k - r^t_{1,T}\overline{X}}{r^t_{1,1}}\right) \tag{33}$$

Denoting these $T$-1 conditional decisions as $\hat{\mathbf{X}}^{t\ D}_{\{1,T-1\}}\left(\overline{X}\right)$, the resulting estimated sequence is:

$$\hat{\mathbf{X}}^{t\ D}\left(\overline{X}\right) = \left\{\hat{\mathbf{X}}^{t\ D}_{\{1,T-1\}}\left(\overline{X}\right),\ \overline{X}\right\}, \tag{34}$$

and can be used as the estimate sequence of $\mathbf{X}^D(X_t = \overline{X})$.

It is noted that, for each candidate value of the reference transmit symbol (a hard-decision estimate of $\mathbf{X}^D$), selecting as candidate sequence of the transmit symbols the transmit sequence with the smallest value of said Euclidean distance term ($D_{ED}$) can be estimated through spatial decision feedback equalization of the remaining transmit symbols ($\hat{\mathbf{X}}^{t\ D}_{\{1,T-1\}}\left(\overline{X}\right)$), computed starting from each candidate value of the reference transmitted symbol. The sequence $\hat{\mathbf{X}}^{t\,D}(\overline{X})$ is then obtained by grouping together (i.e. listing in a sequence of T symbols) the candidate value of the reference symbol, $X_t = \overline{X}$, and the estimated sequence of the remaining transmitted symbols ($\hat{\mathbf{X}}^{t\ D}_{\{1,T-1\}}\left(\overline{X}\right)$).

Specifically, a hard-decision estimate of $\mathbf{X}^D$ can be obtained as:

$$\hat{\mathbf{X}}^{t\ D} = \arg\min_{\overline{X}\in C}\left\{D_{ED}\left(\hat{\mathbf{X}}^{t\ D}\left(\overline{X}\right)\right)\right\} \tag{35}$$

In general $\hat{\mathbf{X}}^{t\,D} \neq \mathbf{X}^D$ (i.e. $\hat{\mathbf{X}}^{t\,D}$ is an estimate of $\mathbf{X}^D$) even if $X_t$ spans all the possible constellation symbols, because the procedure suffers error propagations from the intermediate layers (in general, all except the first and last one). So, for $T>2$, and also in the case of no a priori information, some performance degradation with respect to the ML detector may occur.

It is noted that (32)-(33) may be computed only once and used for several iterations.

Also, modifications of the present embodiment where the set C is changed from one iteration to the other (typically, reduced according to criteria based, e.g., on the ED metric, or the a-priori information, or both) are contemplated.

The a-priori criterion (30) also has a practical implementation, *i.e.*, the most likely *a-priori* sequence $\mathbf{X}^A$ can be easily computed by first determining the relative bits based on the sign of the incoming LLRs $L_{a,i}$ (and then remapping the bit sequence) as:

$$\mathbf{X}^{t\ A}\left(\overline{X}\right) = \mathbf{X} : \left(X_t = \overline{X}\right) \text{ AND}$$
$$\left\{b_{(i-1)M_c+j}\left(\mathbf{X}\right) = sign\left(L_{a,(i-1)M_c+j}\right) \quad \forall i \neq t,\ j = 1,\dots, M_c\right\} \tag{36}$$

Finally, the desired set of sequences is given by:

$$U_t(\overline{X}) = \left\{ \hat{\mathbf{x}}^{t\ D}(X_t = \overline{X}), \qquad \mathbf{x}^{t\ A}(X_t = \overline{X}) \right\} \qquad (37)$$

Those skilled in the art will appreciate that the set of sequences $U_t(\overline{X})$ represents a set of sequences of the transmitted symbols, obtained by grouping together (i.e. listing in sequences of $T$ symbols each) the candidate value of the reference symbol, $X_t \approx \overline{X}$, and one estimated further set of sequences of the remaining (i.e. other than the candidate) transmitted symbols.

The two above simplified criteria lead to an overall number of considered sequences per iteration equal to $2S_c T \leq 2^{M_c+1}T$.

Smaller LLR Flipping Criterion

In this section a method to improve the performance of the previously described T-LORD detector is suggested. It proposes a different way to compute $S_+$. $U_t(\overline{X})$, as defined in equation (31), and only includes the closest and most probable sequence, given a certain root $\overline{X}$. A way to improve the performance of the T-LORD detector is increasing the number of sequences in $U_t(\overline{X})$. This can be done acting on the a-priori metric, taking into account, i.e., also the second most likely X besides equation (30):

$$\mathbf{x}^F = \arg \max_{\mathbf{x} \backslash \mathbf{x}^A} \sum_{i=1}^{T \cdot M_c} b_i(\mathbf{x}) \frac{L_{a,i}}{2} \qquad (38)$$

Those skilled in the art will appreciate that considering $\mathbf{X}^F$ means selecting as a further candidate sequence of the remaining transmit symbols the transmit sequence with the second largest a-priori information ($L_a$) of the symbol sequence.

It can be easily shown that the solution of (38) corresponds to (36) with the least reliable bit (*i.e.,* bit having the minimum $|L_{a,i}|$) flipped.

The following equation shows the a priori criterion with the weakest LLR flipped, jointly applied to each layer, with the exception of the root:

$$\mathbf{x}^{t\ F}(\overline{X}) = \mathbf{x} : \left( X_t = \overline{X} \right)$$

$$AND \left( b_{(i-1)M_c+j}(\mathbf{x}) = \begin{cases} sign\left(L_{a,(i-1)M_c+j}\right) & L_{a,(i-1)M_c+j} \neq \min_{k \neq t}\left|L_{a,(k-1)M_c+j}\right| \\ sign\left(-L_{a,(i-1)M_c+j}\right) & L_{a,(i-1)M_c+j} = \min_{k \neq t}\left|L_{a,(k-1)M_c+j}\right| \end{cases} \right. \\ \forall i \neq t, j = 1, \ldots, M_c $$

$$(39)$$

Then, the desired set of sequences will be given by:

$$U_t(\overline{X}) = \left\{ \hat{\mathbf{x}}^{t\ D}(\overline{X}), \ \mathbf{x}^{t\ A}(\overline{X}), \ \mathbf{x}^{t\ F}(\overline{X}) \right\} \qquad (40)$$

The embodiment described in the foregoing foresees computing $U_t$ by approximating the joint maximization of $(-D_{ED})$ and $D_a$ in equation (4) through a separate maximization of the two metric terms. The transmit sequences $\mathbf{X}$ to be considered for the separate maximization are determined by applying a same "criterion" to all the layers. In particular, the "distance criterion" (32)-(33) leads to approximating arg max$(-D_{BD}(\mathbf{X}))$ ignoring $D_a$, and vice versa the "a-priori criterion" computes arg max $D_a(\mathbf{X})$ ignoring $D_{ED}$.

As an alternative embodiment, the different criteria formerly mentioned can also be applied on a layer by layer basis. This way, the spatial DFE as in [21] is modified based on the possible correction term represented by the a-priori information available for the symbol under consideration at a given layer. In formulas, the idea is to specialize equation (4) for the different layers from $T$-1 to 1 after each channel triangularization has been computed; specifically, at every iteration, for the *t*-th process the "partial" a-posteriori probability metric for layer *j* can be written as:

$$D_{p,j}^t\left(\overline{X}_j^t\right) = -\frac{1}{N_0}\left|Y_j^t - r_{j,j}^t\overline{X}_j^t - \sum_{k=j+1}^{T} r_{j,k}^t X_k^t\right|^2 + \sum_{j=1}^{M_c} b_j(\overline{X}_j^t)\frac{L_{a,j}(X_j^t)}{2} \quad (41)$$

where $L_{a,j}(X_j^t)$ are the LLRs of the bits belonging to the symbol $X_j^t$ output by the decoder, $X_j^t = \overline{X}_j^t$, and $b_j(\overline{X}_j^t)$ are the bits obtained by demapping $\overline{X}_j^t$ expressed in antipodal notation.

Specifically, the partial a-posteriori probability metric in equation (41) is obtained by summing the opposite of a partial Euclidean distance term to an a-priori probability term for the selected candidate symbols.

The partial Euclidean distance term associated to the transmit symbol to be estimated is given for the generic layer *j* by:

$$\frac{1}{N_0}\left|Y_j^t - r_{j,j}^t\overline{X}_j^t - \sum_{k=j+1}^{T} r_{j,k}^t X_k^t\right|^2$$

and comprises computing the square magnitude of the difference between a processed received vector scalar term, and a summation of products, each product involving a coefficient of a triangularized channel state information matrix and a corresponding transmit symbol estimate.

Then, for every $X_T^t = \overline{X}$ the conditional decoded values of $X_1^t, \dots X_{T-1}^t$ are determined recursively as:

$$\left\{ \hat{X}^{t\,D}_{T-1}\left(\overline{X}\right) = round\left(\frac{Y^t_{T-1} - r^t_{T-1,T}\overline{X}}{r^t_{T-1,T-1}}\right), \quad \hat{X}^{t\,A}_{T-1} = \arg\max_{X^t_{T-1}} \sum_{i=1}^{M_c} b_i\left(X^t_{T-1}\right)\frac{L_{a,i}\left(X^t_{T-1}\right)}{2}\right\}$$

$$\hat{X}^t_{T-1}\left(\overline{X}\right) = \arg\max_{\overline{X}^t_{T-1} \in \left\{\hat{X}^{t\,D}_{T-1},\hat{X}^{t\,A}_{T-1}\right\}} D^t_{p,T-1}\left(\overline{X}^t_{T-1}\right)$$

$$\left\{ \hat{X}^{t\,D}_{T-2}\left(\overline{X}\right) = round\left(\frac{Y^t_{T-2} - r^t_{T-2,T-1}\hat{X}^t_{T-1} - r^t_{T-2,T}\overline{X}}{r^t_{T-2,T-2}}\right), \right.$$
$$\left. \hat{X}^{t\,A}_{T-2} = \arg\max_{X^t_{T-2}} \sum_{i=1}^{M_c} b_i\left(X^t_{T-2}\right)\frac{L_{a,i}\left(X^t_{T-2}\right)}{2} \right\}$$

$$\hat{X}^t_{T-2}\left(\overline{X}\right) = \arg\max_{\overline{X}^t_{T-2} \in \left\{\hat{X}^{t\,D}_{T-2},\hat{X}^{t\,A}_{T-2}\right\}} D^t_{p,T-2}\left(\overline{X}^t_{T-2}\right)$$

$$\vdots$$

$$\left\{ \hat{X}^{t\,D}_{1}\left(\overline{X}\right) = round\left(\frac{Y^t_{1} - \sum_{k=2}^{T-1} r^t_{1,k}\hat{X}^t_{k} - r^t_{1,T}\overline{X}}{r^t_{1,1}}\right), \quad \hat{X}^{t\,A}_{1} = \arg\max_{X^t_{1}} \sum_{i=1}^{M_c} b_i\left(X^t_{1}\right)\frac{L_{a,i}\left(X^t_{1}\right)}{2}\right\}$$

$$\hat{X}^t_{1}\left(\overline{X}\right) = \arg\max_{\overline{X}^t_{1} \in \left\{\hat{X}^{t\,D}_{1},\hat{X}^{t\,A}_{1}\right\}} D^t_{p,1}\left(\overline{X}^t_{1}\right)$$

$$(42)$$

It is noted that estimating for each candidate value $\left( X^t_T = \overline{X} \right)$ a sequence of the remaining (i.e. other than the candidates) transmitted symbols $\left( X^t_1, ... X^t_{T-1} \right)$ includes the steps of:

- estimating the remaining transmit symbols in turn one at a time, in a successive detection fashion;
- calculating the partial Euclidean distance term associated to the transmit symbol to be estimated;
- selecting as one candidate transmitted symbol the transmitted symbol with the smallest value of said partial Euclidean distance term - denoted as $\hat{X}^{t\,D}_{k}\left(\overline{X}\right)$ for the k-th layer - which can be simply computed through slicing to the closest constellation element, denoted by the round function in (42);
- selecting as further candidate transmitted symbol the transmit symbol with the largest a-priori information ($L_a$) of said symbol (denoted as $\hat{X}^{t\,A}_{k}$ for the k-th layer);
- calculating the partial a-posteriori probability metric (41) associated to the transmit symbol to be estimated;
- selecting as estimated transmit symbol (denoted as $\hat{X}^t_{k}\left(\overline{X}\right)$ for the k-th layer) the symbol that maximizes said partial a-posteriori probability metric.

It is noted that at a first stage of detection no a-priori information is available, *i.e.* equi-probable symbols are considered and (41)-(42) coincide with equations (32) and (33). Starting from the first iteration, $L_{a,i} \neq 0$ and (41)-(42) need to be computed and updated at every iteration.

Similarly to equation (36):

$$\hat{X}^{t\,A}_{j} = X : \left\{b_i(X) = sign(L_{a,i}) \quad \forall i = 1, ..., M_c\right\} \qquad (43)$$

Denoting the $T$-1 conditional decisions as $\hat{\mathbf{X}}^t_{\{1,T-1\}}(\overline{X})$, one has:

$$\hat{\mathbf{X}}^t_{\{1,T\}}(\overline{X}) = \{\hat{\mathbf{X}}^t_{\{1,T-1\}}(\overline{X}), \overline{X}\}$$
$$\hat{S}_t(\overline{X}) \equiv U_t(\overline{X}) \equiv \hat{\mathbf{X}}^t_{\{1,T\}}(\overline{X}) \qquad (44)$$

Then, a-posteriori LLRs can be computed using equations (9)-(14).

The two above simplified criteria lead to an overall number of considered sequences per iteration equal to $S_C T \le 2^{M_c}1 T$, while the complexity of computing (44) is equivalent to that of using (37) in terms of number of real multipliers (RMs). Complexity-wise, the main difference lies in a higher number of comparisons as witnessed by (42). Considering this embodiment, however, is motivated by a significant performance benefit in some configurations, in particular when $T>2$.

In this case an additional criterion can be applied in order to enhance the performance of the invention at the expense of enlarging the set of possible candidates at each layer level. For instance this can be obtained by generalizing the "smaller LLR flipping criterion" presented previously, specifically for the $j$-th layer:

$$\hat{X}^{t\ F}_j = \underset{X^t_j \setminus \hat{X}^{t\ A}_j}{\arg\max} \sum_{i=1}^{M_c} b_i(X^t_j) \frac{L_{a,i}(X^t_j)}{2}, \qquad (45)$$

Similarly to equation (39):

$$\hat{X}^{t\ F}_j = X : \left( \begin{array}{l} b_i(X) = \begin{cases} sign(L_{a,i}) & L_{a,i} \ne \min_k |L_{a,k}| \\ sign(-L_{a,i}) & L_{a,i} = \min_k |L_{a,k}| \end{cases} \\ \forall i = 1, \ldots, M_c \end{array} \right) \qquad (46)$$

Then, the estimate $\hat{X}^t_j$ can be determined as a function of $X^t_T = \overline{X}$ generalizing equation (42) as:

$$\hat{X}^t_j(\overline{X}) = \underset{\overline{X}^t_j \in \{\hat{X}^{t\ D}_j, \hat{X}^{t\ A}_j, \hat{X}^{t\ F}_j\}}{\arg\max} D^t_{p,j}(\overline{X}^t_j) \qquad (47)$$

Those skilled in the art will appreciate that considering also $\hat{X}^{t\ F}_k$ as a candidate transmitted symbol for the $k$-th layer in the successive detection process (42) means selecting as a further candidate transmitted symbol, the transmitted symbol with the second largest a-priori information ($L_a$) of the symbol.

Modifications of the present embodiment where the set **C** is changed from one iteration to the other (typically, reduced according to criteria based, e.g., on the ED metric, or the a-priori information, or both) are contemplated.

In other words, an embodiment of the invention also includes any of the previous preferred embodiments, wherein identifying a set of values for at least one reference transmitted symbol, the possible values representing candidate values, comprises determining a set of possible values whose cardinality changes as a function of the considered processing iteration, and typically is reduced for an increasing number of iterations.

A possible embodiment includes, but is not limited to, the following formulation. $\hat{X}^t_{T,k}$ is denoted as the estimate of the symbol $X^t_T = X_t$ computed at the k-th iteration, which can be obtained from equation (35). At the first stage of the detection ($k=0$) $\hat{X}^t_{T,0} \equiv \hat{X}^{t\ D}_T$ is assumed. This might be obtained for instance also from equation (35) (which is a particular case of equation (12)). Then, from $k=1$ onwards, when $L_{a,i} \ne 0$ are available from the decoder, it is possible to determine just one candidate symbol $\hat{X}^{t}_{T,k}$ to pass to the upper layers according to:

$$\left\{ \hat{X}^{t\ D}_{T,k} = \hat{X}^{t\ D}_{T,0}, \quad \hat{X}^{t\ A}_{T,k} = \arg\max_{X^t_T} \sum_{i=1}^{M_c} b_i\left(X^t_T\right) \frac{L_{a,i,k}\left(X^t_T\right)}{2} \right\}$$

$$\hat{X}^{t}_{T,k} = \arg\max_{\overline{X}^t_T \in \left\{\hat{X}^{t\ D}_{T,k}, \hat{X}^{t\ A}_{T,k}\right\}} D^t_{P,T}\left(\overline{X}^t_T\right) \tag{48}$$

where $L_{a,i,k}$ are the a-priori LLRs for the i-th bit in the sequence and iteration k.

Then, the remaining symbols may be estimated according to (42) where just one candidate symbol $\overline{X} \equiv \hat{X}^{t}_{T,k}$ is considered instead of all $\overline{X} \in \mathbf{C}$.

Alternatively, at each iteration k the estimate $\hat{X}^{t}_{T}$ result of the iteration k-1 may be used as one of the two starting candidates (the other is still given by the maximization of the a-priori LLRs as usual):

$$\left\{ \hat{X}^{t\ P}_{T,k} = \hat{X}^{t}_{T,k-1}, \quad \hat{X}^{t\ A}_{T,k} = \arg\max_{X^t_T} \sum_{i=1}^{M_c} b_i\left(X^t_T\right) \frac{L_{a,i,k}\left(X^t_T\right)}{2} \right\}$$

$$\hat{X}^{t}_{T,k} = \arg\max_{\overline{X}^t_T \in \left\{\hat{X}^{t\ P}_{T,k}, \hat{X}^{t\ A}_{T,k}\right\}} D^t_{P,T}\left(\overline{X}^t_T\right) \tag{49}$$

where $\hat{X}^{t\ P}_{T,k}$ stands for the first "partial" estimate and replaces $\hat{X}^{t\ D}_{T,k}$ in (48).

Both solutions (48) and (49) yield a clear complexity advantage as only one straightforward sequence is considered at each iteration for $k \geq 1$. As in both cases using such a small number of sequences may not be enough to update the LLRs relative to the whole transmit sequence for iteration $k$ with $k \geq 1$, a possible work-around is to update anyway the LLRs relative to the bits not part of the newly selected hard estimate $\hat{\mathbf{X}}^{t}_{k}$, using the updated a-priori information $L_{a,i,k}$ coming from the outer soft decoder.

The analysis developed previously in describing the first embodiment considered in the foregoing determines $U_t(\overline{X})$ by applying the same criteria, *i.e.,* either the distance or the a-priori criterion, at a layer to all the layers. As a consequence, the estimated sequence $S_t$ may not be optimal, as it may suffer from error propagation. To mitigate this effect, $U_t(\overline{X})$ may include those symbols chosen with different criteria over different layers. For instance, in case of T=3 the following possibilities exist for t=2:

$$U_2(\overline{X}) = \left\{ \mathbf{X}^{2\ D}_{\{1,3\}}(\overline{X}), \ \mathbf{X}^{2\ A}_{\{1,3\}}(\overline{X}), \ \mathbf{X}^{2\ D,A}_{\{1\},\{3\}}(\overline{X}), \ \mathbf{X}^{2\ D,A}_{\{3\},\{1\}}(\overline{X}) \right\} \tag{50}$$

The last two elements in (50) explicitly show the list of those layers processed following the respective criterion in the apex: this is just an example of the most general hyper-symbol $\mathbf{X}^{t\ D,A,F}_{S_D,S_A,S_F}(\overline{X})$, where $S^D$, $S^A$, $S^F$ denote the indexes of the layers subject to the distance, a-priori, LLR-flipping criteria, respectively. Any possible combination of the above presented criteria is possible.

The choice of branching over each intermediate layer causes a complexity growth; *i.e.,* if all three criteria are considered at each layer level, then $3^{T-1}S_C T$ sequences per iteration are to be considered instead of the $2S_C T$ obtained adopting separately only the a priori and distance criteria, as proposed for the basic version of the technique (*i.e.,* the first embodiment).

In further possible embodiments, the "T-LORD" arrangement described herein may also be formulated in the real domain if a suitable "lattice" (*i.e.,* real domain) representation, is derived prior to the stages formerly described.
Specifically, another embodiment is to adopt a real representation of the MIMO system equation (1) where the in-phase (*I*) and quadrature-phase (*Q*) components of the complex quantities are ordered as:

$$
\begin{aligned}
\mathbf{x} &= \begin{bmatrix} X_{1,I} & X_{1,Q} & \ldots & X_{T,I} & X_{T,Q} \end{bmatrix}^T = \begin{bmatrix} x_1 & x_2 & \ldots & x_{2T} \end{bmatrix}^T \\
\mathbf{y} &= \begin{bmatrix} Y_{1,I} & Y_{1,Q} & \ldots & Y_{R,I} & Y_{R,Q} \end{bmatrix}^T = \begin{bmatrix} y_1 & y_2 & \ldots & y_{2R} \end{bmatrix}^T \\
\mathbf{n} &= \begin{bmatrix} N_{1,I} & N_{1,Q} & \ldots & N_{R,I} & N_{R,Q} \end{bmatrix}^T \\
\mathbf{y} &= \mathbf{hx} + \mathbf{n} = \begin{bmatrix} \mathbf{h}_1 & \ldots & \mathbf{h}_{2T} \end{bmatrix} \mathbf{x} + \mathbf{n}
\end{aligned}
\tag{51}
$$

**h** is a real channel matrix of size 2*R*x2*T* where the channel columns then have the form:

$$
\begin{aligned}
\mathbf{h}_{2k-1} &= \begin{bmatrix} \mathrm{Re}(H_{1,k}) & \mathrm{Im}(H_{1,k}) & \ldots & \mathrm{Re}(H_{R,k}) & \mathrm{Im}(H_{R,k}) \end{bmatrix}^T \\
\mathbf{h}_{2k} &= \begin{bmatrix} -\mathrm{Im}(H_{1,k}) & \mathrm{Re}(H_{1,k}) & \ldots & -\mathrm{Im}(H_{R,k}) & \mathrm{Re}(H_{R,k}) \end{bmatrix}^T
\end{aligned}
\tag{52}
$$

where the elements $H_{j,k}$ are entries of the (complex) channel matrix **H**.

As a consequence of this formulation, the pairs $\mathbf{h}_{2k-1}^T$, $\mathbf{h}_{2k}$ are already orthogonal, *i.e.,* $\mathbf{h}_{2k-1}^T \mathbf{h}_{2k} = 0$, and this property may prove to be very effective for the procedure. Other useful relations are:

$$
\begin{aligned}
\|\mathbf{h}_{2k-1}\|^2 &= \|\mathbf{h}_{2k}\|^2 \\
\mathbf{h}_{2k-1}^T \mathbf{h}_{2j-1} &= \mathbf{h}_{2k}^T \mathbf{h}_{2j}, \qquad \mathbf{h}_{2k-1}^T \mathbf{h}_{2j} = -\mathbf{h}_{2k}^T \mathbf{h}_{2j-1}
\end{aligned}
\tag{53}
$$

where $k, j = \{1,..., T\}$ and $k \neq j$.
Using this formulation, all formerly presented embodiments may be translated into an equivalent real-domain representation. Namely, the first three embodiments discussed in the foregoing may be implemented in the real domain according to the three further embodiments discussed in the following, where the equations for the channel processing are given while the remainder of the real-domain formulation is omitted for brevity.

Channel Processing and Demodulation

From (51)-(53) the I and Q of the complex symbols may be demodulated independently thus allowing the same degree of parallelism of the complex domain formulation, as clear from the following. As mentioned, the idea to simplify computations is to focus on one symbol, the $X_t = (X_{t,I} X_{t,Q}) = (x_{t-1}, x_t)$ symbol, transmitted by the *t*-th antenna, and consider for the *I* and *Q* all the possible PAM values, or properly selected subsets, denoted by $\mathbf{m}_I$ and $\mathbf{m}_Q$ for $X_{t,I}, X_{t,Q}$ respectively, with respective cardinality $S_{mI}, S_{mQ}$. For each of the $S_{mI} \cdot S_{mQ}$ possible cases $(\bar{x}_{t-1}, \bar{x}_t)$, as many corresponding groups of transmit sequences **X,** denoted with $U_t(\bar{x}_{t-1}, \bar{x}_t)$, are determined. The final set $S_t$ is then built by choosing those elements in $U_t$ maximizing equation (4):

$$
S_t = \left\{ \arg\max_{\mathbf{x} \in U_t(\bar{x}_{t-1}, \bar{x}_t)} D(\mathbf{x}), \qquad \forall \bar{x}_{t-1} \in \mathbf{m}_I, \forall \bar{x}_t \in \mathbf{m}_Q \right\}
\tag{54}
$$

In order to decouple the problem in turn for the different transmit antennas, and for the I and Q components belonging to the complex symbol transmitted by an antenna, and efficiently determine $U_t$, it is useful to perform a channel matrix "triangularization" process, meaning that through proper processing it is factorized in two or more product matrices one of which is triangular. It is understood that different matrix processing may be applied to **H.** Examples include, but are not limited to, QR and Cholesky decomposition procedures [30]. In the following QR will be used, without loss of generality.

To simplify computations, one may introduce the permutation matrix $\pi_t$, which circularly shifts the elements of **x** (and consequently the order of the columns of **x,** too), such that the pair $(x_{t-1}, x_t)$ under investigation moves to the last two positions:

$$\pi_t = \begin{bmatrix} \mathbf{u}_{2(t-1)-1} & \mathbf{u}_{2(t-1)} & \cdots & \mathbf{u}_1 & \mathbf{u}_2 & \cdots & \mathbf{u}_{2t-1} & \mathbf{u}_{2t} \end{bmatrix}^T \tag{55}$$

where $\mathbf{u}_i$ is a column vector of length $2T$ with all zeros but the $i$-th element equal to one.

Consequently, equation (51) can be rewritten as:

$$\mathbf{y} = \mathbf{h}\pi_t^{-1}\pi_t\mathbf{x} + \mathbf{n} = \mathbf{h}\pi_t^T\pi_t\mathbf{x} + \mathbf{n} \tag{56}$$

T different QR decompositions are performed, one for each $\pi_t$:

$$\mathbf{h}\pi_t^T = \mathbf{q}_t\mathbf{r}_t \tag{57}$$

where $\mathbf{q}_t$ is an orthonormal matrix of size $2R \times 2T$ and $\mathbf{r}_t$ is a $2T \times 2T$ upper triangular matrix having the structure:

$$\mathbf{r}_t = \begin{bmatrix} r_{1,1} & 0 & \cdots & r_{1,2(t-1)-1} & r_{1,2(t-1)} & r_{1,2t-1} & r_{1,2t} \\ 0 & r_{2,2} & \cdots & r_{2,2(t-1)-1} & r_{2,2(t-1)} & r_{2,2t-1} & r_{2,2t} \\ \vdots & \vdots & \ddots & \vdots & \vdots & \vdots & \vdots \\ 0 & 0 & \cdots & r_{2(t-1)-1,2(t-1)-1} & 0 & r_{2(t-1)-1,2t-1} & r_{2(t-1)-1,2t} \\ 0 & 0 & \cdots & 0 & r_{2(t-1),2(t-1)} & r_{2(t-1),2t-1} & r_{2(t-1),2t} \\ 0 & 0 & \cdots & 0 & 0 & r_{2t-1,2t-1} & 0 \\ 0 & 0 & \cdots & 0 & 0 & 0 & r_{2t,2t} \end{bmatrix}$$

$$\tag{58}$$

Interestingly, the entries at position $(2k-1, 2k)$ are zeros. This is a consequence of equations (51)-(53) and specifically of $\mathbf{h}_{2k-1}^T \mathbf{h}_{2k} = 0$, and it is of basic importance to be able to independently (*i.e., in parallel*) treat the *I* and *Q* of complex modulated symbols $X_k$.

The ED metrics of equation (4) may be rewritten as:

$$D_{t} = -\frac{1}{N_0}\|\mathbf{y} - \mathbf{h}\mathbf{x}\|^2 = -\frac{1}{N_0}\|\mathbf{y} - \mathbf{q}_t\mathbf{r}_t\pi_t\mathbf{x}\|^2 = -\frac{1}{N_0}\|\mathbf{q}_t^T\mathbf{y} - \mathbf{r}_t\pi_t\mathbf{x}\|^2 = -\frac{1}{N_0}\|\mathbf{y}_t' - \mathbf{r}_t\mathbf{x}_t'\|^2 \tag{59}$$

where $\mathbf{y}'_t = \mathbf{q}_t^T \mathbf{Y}$ and $\mathbf{x}'_t = \pi_t \mathbf{x}$.

It is useful to enumerate the rows of $\mathbf{r}_t$ from top to bottom and create a correspondence with the different $I$ and $Q$ of the different layers, ordered as in $\mathbf{x}'_t$. This way $(x_{t-1}, x_t)$ are located in the last two positions of $\mathbf{x}'_t$ and correspond to the last rows of $\mathbf{r}_t$, which acts as an equivalent triangular channel. The demodulation principle is to select the $T$-th layer as the reference one and determine for it a list of candidate $I$ and $Q$ values. Then, for each sequence in the list, interference is cancelled from the received signal and the remaining PAM estimates are determined through interference nulling and cancelling, or spatial DFE. Exploiting the triangular structure of the channel, the estimation of the remaining 2T-2 real components of the symbols can be simply implemented through a slicing operation to the closest PAM coordinate, thus entailing a negligible complexity. More details on this demodulation principle, can be found in [21]. It is noted that [21] does not foresee processing a-priori information differently from the present technique, which represents a very significant improvement of it.

Using (51)-(59) all the formulations previously described in the complex domain can be generalized in a straightforward way and thus represent other embodiments for the present invention.

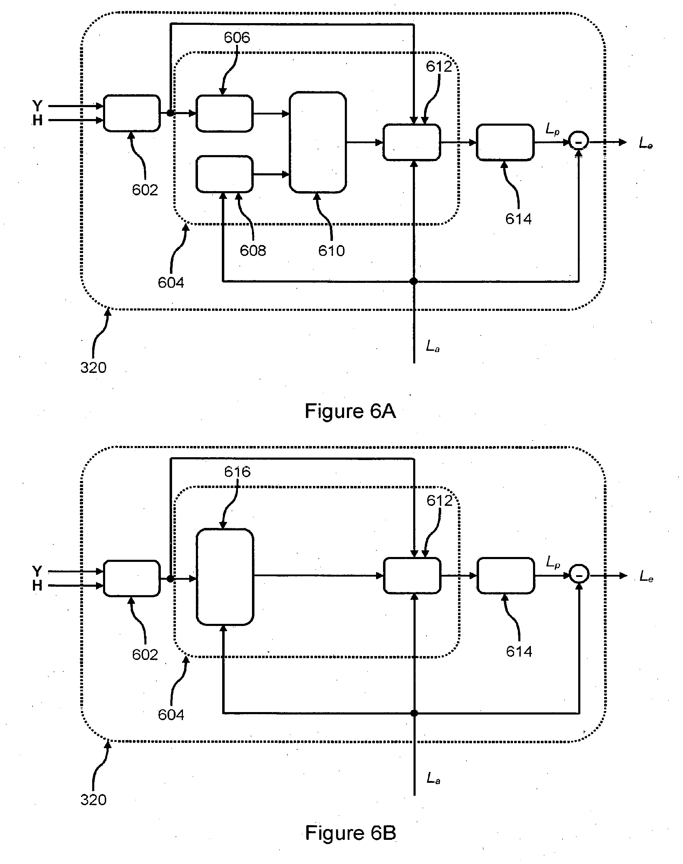

**FIG. 6A** and **FIG. 6B** are flowcharts illustrating the means or steps for performing the specified functions according to one or more embodiments of the present invention. They both refer to a single iteration process.

Specifically, **FIG. 6A** illustrates, according to an embodiment, the means or steps performed by a receiver comprising an iterative detection and decoding of multiple antenna communications that detects sequences of digitally modulated symbols transmitted by multiple sources, wherein the detector generates extrinsic bit soft output information processing the a-priori information provided by a soft-output decoder. The detector approximates the computation of the maximum a-posteriori transmitted sequence by determining two sets of candidates, processed by two distinguishable units, or processors. One unit receives as input the processed received sequence and processed channel state information matrix. The other unit processes as input the a-priori bit soft information.

**FIG. 6B** illustrates, according to an embodiment, the means or steps performed by a receiver comprising an iterative detection and decoding of multiple antenna communications that detects sequences of digitally modulated symbols transmitted by multiple sources, wherein the detector generates extrinsic bit soft output information processing the a-priori information provided by a soft-output decoder. The detector approximates the computation of the maximum a-posteriori transmitted sequence by determining a set of candidates obtained by properly processing the received sequence, the channel state information matrix, the a-priori bit soft information.

The arrangement described herein, according to an embodiment, achieves near-optimal (*i.e.*, near MAP) performance for a high number of transmit antennas, with a much lower complexity as compared to a MAP detection and decoding method and apparatus. Moreover, the arrangement described herein is suitable for highly parallel hardware architectures.

Referring to **FIG. 6A,** block *320* includes all the blocks that repeat their processing for a number of times equal to the number of transmit antennas, each time changing some parameter, or reading different memory stored values, related to the transmit antenna index.

Block *602* represents, according to an embodiment, the means for or step of pre-processing the system equation (1) and particularly of the channel matrix and the received vector, in order to factorize the channel matrix into a product of matrices one of which is a triangular matrix. As an illustrative example, the channel matrix may be decomposed into the product of an orthogonal matrix and a triangular matrix. The process is repeated for a number of times equal to the number of transmit antennas, where each time the column of the input the channel matrix are disposed according to a different order.

Block *604* includes, according to an embodiment, all the blocks that repeat their processing for a number of times equal to the number of elements included in the set **C** spanned by the reference symbols $X_t$, in each case assigning a different value to $X_t$. As those blocks are also included in *320,* this means that this has to be done for each $t=1,...,T$.

Block *606* represents, according to an embodiment, the means for or step of computing $\hat{\mathbf{X}}^{t\,D}(\overline{X})$ as exemplified in equations (32)-(34).

Block *608* represents, according to an embodiment, the means for or step of computing $\mathbf{X}^{t\,A}(\overline{X})$ as exemplified in equations (30) and (36).

Block *610* represents, according to an embodiment, the means for or step of determining the desired set of candidate transmit sequences $U_t(\overline{X})$.

Block *612* represents, according to an embodiment, the means for or step of determining a subset of sequences $S_t(\overline{X})$ as shown in equation (8) or alternatively $S'_t(\overline{X})$ as shown in equation (10), and storing the related metric $D(\mathbf{X})$ for $\mathbf{X} \in S_t(\overline{X})$ (or alternatively $\mathbf{X} \in S'_t(\overline{X})$).

Block **614** represents, according to an embodiment, the means for or step of computing the a-posteriori bit LLRs $L_p$ as shown in equation (13). Once $L_p$ are available, a final subtraction of the input a-priori LLRs is sufficient to generate the extrinsic $L_e$ as for equation (7, *i.e.* the extrinsic information ($L_e$) is calculated from the a-priori information

($L_a$) and the a-posteriori information ($L_p$).).

Referring to **FIG. 6B,** block ***320*** includes all the blocks that have to repeat their processing for a number of times equal to the number of transmit antennas, each time changing some parameter, or reading different memory stored values, related to the such transmit antenna index.

Block ***602*** represents, according to an embodiment, the means for or step of pre-processing the system equation (1) and particularly of the channel matrix and the received vector, in order to factorize the channel matrix into a product of matrices one of which is a triangular matrix. As an illustrative example, the channel matrix can be decomposed into the product of an orthogonal matrix and a triangular matrix. The process is repeated for a number of times equal to the number of transmit antennas, where each time the column of the input the channel matrix are disposed according to a different order.

Block ***604*** includes, according to an embodiment, all the blocks that repeat their processing for a number of times equal to the number of elements included in the set **C** spanned by the reference symbols $X_t$, in each case assigning a different value to $X_t$. As those blocks are also included in ***600,*** this means that this has to be done for each $t=1,...,T$.

Block ***616*** represents, according to an embodiment, the means for or step of determining the desired set of candidate transmit sequences $U_t(\overline{X})$.

Block **612** represents, according to an embodiment, the means for or step of determining a subset of sequences $S_t(\overline{X})$ as shown in equation (8) or alternatively $S'_t(\overline{X})$ as shown in equation (10), and storing the related metric $D(\mathbf{X})$ for $\mathbf{X} \in S_t(\overline{X})$ (or alternatively $\mathbf{X} \in S'_t(\overline{X})$).

Block ***614*** represents, according to an embodiment, the means for or step of computing the a-posteriori bit LLRs $L_p$ as shown in equation (13). Once $L_p$ are available, a final subtraction of the input a-priori LLRs is sufficient to generate the extrinsic $L_e$ as for equation (7).

As noted above, channel state information is assumed to be known at the receiver. Therefore, the receiver may include a set of rules having as input:

- the (complex) received vector observations,
- the (complex) gain channel paths between the transmit and receive antennas, and
- the properties of the desired QAM (or PSK) constellation to which the symbols belong.

Consequently, without prejudice to the underlying principles of the invention, the details and the embodiments may vary, even appreciably, with reference to what has been described by way of example only, without departing from the scope of the invention.

<u>List of references</u>

[1] I.E. Telatar, "Capacity of Multi-Antenna Gaussian Channels," Eur. Trans. Tel., 10, 6, 585-595, November, 1999.

[2] G.J. Foschini and M. Gans, "On the Limits of Wireless Communication in a Fading Environment," Wireless Pers. Comm., 6, 311-355, March, 1998.

[3] IEEE P802.11n™/D1.0, "Draft Amendment to [....] -Part 11: Wireless LAN Medium Access Control (MAC) and Physical Layer (PHY) specifications: Enhancements for Higher Throughput", A. Stephens et al.

[4] IEEE Project P802.16-2004/Cor1-D5, Draft Corrigendum to IEEE Standard for Local and Metropolitan Area Networks - Part 16: Air Interface for Fixed Broadband Wireless Access Systems.

[5] Requirements and recommendations for WiMAX ForumTM Mobility Profiles, WiMAX, Service Providers Working Group, November 2005.

[6] W. van Etten, "Maximum Likelihood Receiver for Multiple Channel Transmission Systems", IEEE Trans. on Comms, Vol. 24, No. 2, pp. 276-283, Feb. 1976.

[7] C. Berrou, A. Glavieux and P. Thitimajshima, "Near Shannon limit error-correction coding and decoding: Turbo codes", Proc. ICC 1993, pp 1064-1070, May 1993.

[8] C. Douillard et al., "Iterative Correction of Intersymbol Interference: Turbo-Equalization", European Trans. on Telecomm. and Rel. Techn., vol. 6, pp. 507-511, Sept. 1995.

[9] H. V. Poor and S. Verdu', "Probability of Error in MMSE Multiuser Detection", IEEE Trans. on Information Theory, Vol. 43, May 1997, pp. 858-871.

[10] P. W. Wolniansky, G. J. Foschini, G. D. Golden, R. A. Valenzuela, "V-BLAST: An Architecture for Realizing Very High Data Rates Over the Rich-Scattering Wireless Channel," invited paper, Proc. ISSSE-98, Pisa, Italy, Sept. 29, 1998.

[11] G. J. Foschini, G. D. Golden, R. A. Valenzuela, P. W. Wolniansky, "Simplified Processing for High Spectral Efficiency Wireless Communications employing multi-element arrays," IEEE Journal on Selected Areas in Communications, vol. 17, no. 11, pp. 1841-1852, Nov. 1999.

[12] M. Sellathurai and S. Haykin, "Turbo-BLAST for wireless communications: Theory and experiments", IEEE Trans. on Sign. Proc., vol. 50, pp. 2538-2546, Oct. 2002.

[13] B. Lu, G. Yue, and X. Wang, "Performance analysis and design optimization of LDPC coded MIMO OFDM systems," IEEE Trans. Signal Proc., xxx

[14] D. Zuyderhoff, X. Wautelet et al., "MMSE Turbo Receiver for space-frequency bit-interleaved coded OFDM", Proc. IEEE Vehicular Technology Conf., vol. 1, pp. 567-571, Oct. 2003.

[15] W.-J. Choi, R. Negri and J. M. Cioffi, "Combined ML and DFE Decoding for the V-BLAST System", Proc. IEEE Int. Conf. on Communications, Vol. 3, pp. 1243-1248, June 2000.

[16] Y. Li and Z. Q. Luo, "Parallel Detection for V-BLAST System", IEEE GLOBECOM, Vol. 1, pp. 340-344, May 2002.

[17] D. W. Waters and J. R. Barry, "The Chase Family of Detection Algorithms for Multiple-Input Multiple-Ouput Channels", IEEE GLOBECOM, Vol. 4, pp. 2635-2639, Nov. 2004.

[18] D. W. Waters and J. R. Barry, "The Chase Family of Detection Algorithms for Multiple-Input Multiple-Ouput Channels", Submitted to IEEE Trans. on Information Theory, Sept. 2005

[19] E. Agrell, T. Eriksson et al., "Closest Point Search in Lattices," IEEE Trans. on Inf. Theory, Vol. 48, No. 8, August 2002.

[20] M. O. Damen, A. Chkeif and J.-C. Belfiore, "Lattice Codes Decoder for Space-Time Codes", IEEE Commun. Letters, Vol. 4, No. 5, pp. 161-163, May 2000.

[21] M. Siti and M. P. Fitz, "A novel soft-output layered orthogonal lattice detector for multiple antenna communications.", Proc. IEEE Int. Conf. on Communications, June, 2006.

[22] A. Tomasoni, M.Ferrari, D. Gatti, F. Osnato and S. Bellini, "A Low Complexity Turbo MMSE Receiver for W-LAN MIMO Systems", Proc. IEEE Int. Conf. on Communications, June, 2006.

[23] Yutak Yasuda, Kanshiro Kashiki and Yasuo Hirata, "High-Rate Punctured Convolutional Codes for Soft Decision Viterbi Decoding", IEEE Transactions On Communications, Vol. COM-32, No. 3, pp. 315-319, March 1984.

[24] S. Dolinar, D. Divsalar, "Weight Distributions for Turbo Codes Using Random and Nonrandom Permutations", JPL TDA Progr, Rep., vol 42-122, Aug. 1995.

[25] E. Viterbo, J. Boutros, "A Universal Lattice Code Decoder for Fading Channels," IEEE Trans. on Inf. Theory, Vol. 45, No. 5, July 1999.

[26] Damen, El Gamal, G. Caire, "On Maximum-Likelihood Detection and the Search for the Closest Lattice Point," IEEE Trans. on Inf. Theory, Vol. 49, No. 10, October 2003.

[27] Van Nee, Van Zelst, "Maximum likelihood decoding in a space division multiplexing system," Awater, Proc. VTC 2000, vol. 1, 6-10.

[28] IEEE 802.11-05/0149r1, "WWiSE Proposal: High throughput extension to the 802.11 Standard," C. Kose, B. Edwards et al.

[29] B. Hassibi, "An efficient square-root algorithm for BLAST," in Proc. ICASSP, Istanbul, Turkey, pp. 11737-11740, June 2000.

[30] G. H. Golub and C. F. Van Loan, "Matrix Computations", Johns Hopkins University Press, Baltimore, MD, 1996.

**Claims**

1. A method of detecting (320) sequences of digitally modulated symbols, said modulated symbols being transmitted by multiple transmitting sources (20) and received by multiple receiving elements (22) and grouped as a received vector (Y) of sequences of digitally modulated symbols, wherein said method includes the step of:

   - receiving a channel state information matrix (H) from a first module (312) and processing said channel state information matrix (H), said processing including a triangularization of said channel state information matrix (H),
   - identifying a set of values for at least one reference transmit symbol, the possible values representing candidate values;
   - determining for each candidate value a set of sequences of transmitted symbols obtained by:

      a) estimating for each candidate value a set of sequences of estimated values for the remaining transmitted symbols, and
      b) grouping said candidate values and said estimated values;

   - calculating a metric for each of said sequence of transmitted symbols,
   - selecting the sequence of transmitted symbols that maximizes said metric, one for each candidate value, and

**25**

- storing the value of the related metric and the associated selected sequence,

**characterized in that**:

- said method receives a-priori information ($L_a$) on said modulated symbols from a second module (322),
- said calculating a metric for each said sequences of transmitted symbols includes calculating an a-posteriori probability metric for each of said sequence of transmitted symbols,
- said set of sequences of estimated values for the remaining transmitted symbols is estimated for each candidate value by estimating the remaining transmit symbols in turn one at a time, in a successive detection fashion, by:

a) calculating a partial Euclidean distance term associated with the transmit symbol to be estimated;
b) selecting as one candidate transmitted symbol the transmitted symbol with the smallest value of said partial Euclidean distance term;
c) selecting as further candidate transmitted symbol the transmit symbol with the largest a-priori information ($L_a$) of said symbol;
d) calculating a partial a-posteriori probability metric associated with the transmit symbol to be estimated;
e) selecting as estimated transmit symbol the symbol that maximizes said partial a-posteriori probability metric, and

- said method includes calculating a-posteriori bit soft output information ($L_p$) for said selected sequences of transmitted symbols from the related metrics for said selected sequences of transmitted symbols.

2. The method of claim 1, wherein said method includes the step of ordering the layers considered for the detection.

3. The method of claim 1, wherein processing of said method is performed in the complex domain by calculating real and imaginary parts.

4. The method of claim 1, wherein said received vector (Y) is a complex received vector (Y) and said channel state information matrix (H) is a complex channel state information matrix (H).

5. The method of claim 4, wherein processing said complex channel state information matrix (H) includes the steps of:

- factorizing said complex channel state information matrix (H) into an orthogonal matrix and a triangular matrix.

6. The method of claim 5, wherein said number of receiving elements (22) is equal to the number of transmitting sources (20) minus one.

7. The method of claim 6, wherein processing said complex channel state information matrix (H) includes the steps of:

- factorizing said complex channel state information matrix (H) into an orthogonal matrix and a triangular matrix with its last row eliminated.

8. The method of claim 5, wherein processing said complex received vector (Y) includes:

- multiplying said transpose conjugate of the orthogonal matrix by said complex received vector (Y).

9. The method of claim 4, wherein processing said complex channel state information matrix (H) includes the steps of:

- forming a Gram matrix using said complex channel state information matrix (H),
- performing a Cholesky decomposition of said Gram matrix, and
- calculating the called Moore-Penrose matrix as an inverse of said complex channel state information matrix (H), resulting in a pseudoinverse matrix.

10. The method of claims 9, wherein processing said complex received vector (Y) includes the steps of:

- multiplying said pseudoinverse matrix by the complex received vector (Y).

11. The method of claim 1, wherein said estimating the remaining transmit symbols in turn one at a time, in a successive detection fashion includes the steps of:

- selecting at least as a further candidate transmitted symbol the transmitted symbol with the second largest a-priori information ($L_a$) of said symbol.

12. The method of claim 1, wherein said calculating the partial Euclidean distance term associated with the transmit symbol to be estimated comprises computing the square magnitude of the difference between a processed received vector scalar term, and a summation of products, each product involving a coefficient of the triangularized channel state information matrix (H) and a corresponding transmit symbol estimate.

13. The method of claim 1, wherein said calculating the partial a-posteriori probability metric includes the steps of:

- summing the opposite of said partial Euclidean distance term to said a-priori probability term for said selected candidate symbols.

14. The method of claim 1, comprising generating bit soft-output information for the bits corresponding to the symbols transmitted by all the antennas by:

- repeating the considered steps and operations a number of times equal to a number of transmit antennas, each time associated with a different disposition of layers corresponding to the transmitted symbols, each layer being a reference layer in only one of the dispositions, and disposing the columns of the channel matrix accordingly prior to further processing.

15. The method of claim 1, wherein extrinsic information ($L_e$) is calculated from said a-priori information ($L_a$) and said a-posteriori information ($L_p$).

16. The method of claim 15, wherein said extrinsic information ($L_e$) is fed to said second module (322).

17. The method of claim 16, wherein said a-priori information ($L_a$) on said modulated symbols from said second module (322) is updated from said information ($L_e$) at each of said processing instance.

18. The method of claim 17, wherein said extrinsic information ($L_e$) is calculated in at least two processing instances by:

- calculating in a first instance the extrinsic information ($L_e$) without any a-priori information ($L_a$), and
- calculating in a second instance the extrinsic information ($L_e$) from the a-priori information ($L_a$) fed back from said second module (322), until a decision on the bit value is made after a given number of instances.

19. The method of claim 18, wherein said processing instances are selected as processing iterations or processing stages.

20. The method of claim 1, wherein identifying a set of values for at least one reference transmit symbol,' the possible values representing candidate values, comprises

- determining a set of possible values whose cardinality changes as a function of the considered processing iteration, and typically is reduced for an increasing number of iterations.

21. The method of claim 1, wherein detection (320) is performed in the real domain by resorting to a representation, that separately treats the in-phase and quadrature-phase components of:

- said received vector (Y),
- said channel state information matrix (H), and
- said modulated symbols transmitted by said transmitting sources.

22. The method of claim 16, wherein said extrinsic information ($L_e$) and said a-priori information ($L_a$) are exchanged as values in the logarithmic domain.

23. The method of claim 1, wherein said second module is a forward error correction code decoder (322) .

**24.** The method of claim 1, wherein said transmitting sources (20) and said receiving elements (22) are antennas (20, 22).

**25.** The method of claim 16, wherein said method includes the steps of:

- subjecting said a-priori information ($L_a$) from said second module (322) to interleaving (326) before said sequences are detected (320), and
- subjecting said soft-output information ($L_e$) to de-interleaving (324) before feeding to said second module (322).

**26.** A device for detecting (320) sequences of digitally modulated symbols, said modulated symbols being transmitted by multiple transmitting sources (20) and received by multiple receiving elements (22), said device being configured for performing the method of any of claims 1 to 25.

**27.** A receiver for receiving digitally modulated symbols, the receiver including the device of claim 26.

**28.** A computer program product loadable into the memory of a computer and comprising software code portions adapted for performing the steps of any of claims 1 to 25 when the product is run on a computer.

**Patentansprüche**

**1.** Verfahren zur Erkennung (320) von Sequenzen digital modulierter Symbole, wobei die modulierten Symbole von mehreren Sendequellen (20) gesendet werden und von mehreren Empfangselementen (22) empfangen werden und als ein Empfangsvektor (Y) von Sequenzen digital modulierter Symbole gruppiert werden, wobei das Verfahren den Schritt aufweist:

- Empfangen einer Kanalzustands-Informationsmatrix (H) von einem ersten Modul (312) und Verarbeiten der Kanalzustands-Informationsmatrix (H), wobei die Verarbeitung eine Triangulierung der Kanalzustands-Informationsmatrix (H) aufweist,
- Identifizieren eines Satzes von Werten für mindestens ein Referenzsendesymbol, wobei die möglichen Werte Kandidatenwerte darstellen;
- Bestimmen, für jeden Kandidatenwert, eines Satzes von Sequenzen gesendeter Symbole, die erhalten werden durch:

a) Schätzen, für jeden Kandidatenwert, eines Satzes von Sequenzen geschätzter Werte für die verbleibenden gesendeten Symbole, und
b) Gruppieren der Kandidatenwerte und der geschätzten Werte;

- Berechnen einer Metrik für jede der Sequenzen gesendeter Symbole,
- Auswählen der Sequenz gesendeter Symbole, die die Metrik maximieren, eine für jeden Kandidatenwert, und
- Speichern des Wertes der zugehörigen Metrik und der zugeordneten ausgewählten Sequenz,

**dadurch gekennzeichnet, dass**

- das Verfahren a-priori-Information ($L_a$) auf den modulierten Symbolen von einem zweiten Modul (322) empfängt,
- das Berechnen einer Metrik für jede der Sequenzen gesendeter Symbole Berechnen einer a-posteriori-Wahrscheinlichkeitsmetrik für jede der Sequenzen gesendeter Symbole aufweist,
- der Satz von Sequenzen geschätzter Werte für die verbleibenden gesendeten Symbole für jeden Kandidatenwert geschätzt wird, indem die verbleibenden Sendesymbole einzeln nacheinander in einer aufeinanderfolgenden Erkennungsweise geschätzt werden, durch:

a) Berechnen eines partiellen euklidischen Abstandsterms, der dem zu schätzenden Sendesymbol zugeordnet ist;
b) Auswählen des gesendeten Symbols mit dem kleinsten Wert des partiellen euklidischen Abstandsterms als ein gesendetes Kandidatensymbol;
c) Auswählen des Sendesymbols mit der größten a-priori-Information ($L_a$) des Symbols als weiteres gesendetes Kandidatensymbol;
d) Berechnen einer partiellen a-posteriori-Wahrscheinlichkeitsmetrik, die dem zu schätzenden Sendesymbol zugeordnet ist;

e) Auswählen des Symbols, das die partielle a-posteriori-Wahrscheinlichkeitsmetrik maximiert, als geschätztes Sendesymbol, und

- das Verfahren Berechnen von a-posteriori "Soft-Output"-Bit-Information ($L_p$) für die ausgewählten Sequenzen gesendeter Symbole aus den zugehörigen Metriken für die ausgewählten Sequenzen gesendeter Symbole aufweist.

2. Verfahren nach Anspruch 1, wobei das Verfahren den Schritt des Ordnens der für die Erkennung in Betracht gezogenen Schichten aufweist.

3. Verfahren nach Anspruch 1, wobei das Verarbeiten des Verfahrens im komplexen Definitionsbereich durch Berechnen von Real- und Imaginärteilen durchgeführt wird.

4. Verfahren nach Anspruch 1, wobei der empfangene Vektor (Y) ein komplexer empfangener Vektor (Y) ist und die Kanalzustands-Informationsmatrix (H) eine komplexe Kanalzustands-Informationsmatrix (H) ist.

5. Verfahren nach Anspruch 4, wobei das Verarbeiten der komplexen Kanalzustands-Informationsmatrix (H) die Schritte aufweist:

- Faktorisieren der komplexen Kanalzustands-Informationsmatrix (H) in eine orthogonale Matrix und eine Dreiecksmatrix.

6. Verfahren nach Anspruch 5, wobei die Anzahl der Empfangselemente (22) gleich der Anzahl der Sendequellen (20) minus eins ist.

7. Verfahren nach Anspruch 6, wobei das Verarbeiten der komplexen Kanalzustands-Informationsmatrix (H) die Schritte aufweist:

- Faktorisieren der komplexen Kanalzustands-Informationsmatrix (H) in eine orthogonale Matrix und eine Dreiecksmatrix, deren letzte Zeile eliminiert ist.

8. Verfahren nach Anspruch 5, wobei das Verarbeiten des komplexen empfangenen Vektors (Y) aufweist:

- Multiplizieren der transponierten Konjugierten der orthogonalen Matrix mit dem komplexen empfangenen Vektor (Y).

9. Verfahren nach Anspruch 4, wobei das Verarbeiten der komplexen Kanalzustands-Informationsmatrix (H) die Schritte aufweist:

- Bilden einer Gram-Matrix unter Verwendung der komplexen Kanalzustands-Informationsmatrix (H),
- Durchführung einer Cholesky-Zerlegung der Gram-Matrix, und
- Berechnen der sogenannten Moore-Penrose-Matrix als eine Inverse der komplexen Kanalzustands-Informationsmatrix (H), was in einer pseudoinversen Matrix resultiert.

10. Verfahren nach Anspruch 9, wobei das Verarbeiten des komplexen empfangenen Vektors (Y) die Schritte aufweist:

- Multiplizieren der pseudoinversen Matrix mit dem komplexen empfangenen Vektor (Y).

11. Verfahren nach Anspruch 1, wobei das Schätzen der verbleibenden Sendesymbole einzeln nacheinander, in einer aufeinanderfolgenden Erkennungsweise, die Schritte aufweist:

- Auswählen mindestens des gesendeten Symbols mit der zweitgrößten a-priori-Information ($L_a$) des Symbols als ein weiteres gesendetes Kandidatensymbol.

12. Verfahren nach Anspruch 1, wobei das Berechnen des partiellen euklidischen Abstandsterms, der dem zu schätzenden Sendesymbol zugeordnet ist, Berechnen des Betragsquadrats der Differenz zwischen einem verarbeiteten empfangenen Vektor-Skalar-Term und einer Summe von Produkten umfasst, wobei jedes Produkt eine Summe von Koeffizienten der Kanalzustands-Informations-Dreiecksmatrix (H) und eine entsprechende Sendesymbol-Schätzung aufweist.

13. Verfahren nach Anspruch 1, wobei das Berechnen der partiellen a-posteriori-Wahrscheinlichkeitsmetrik die Schritte aufweist:

- Addieren der Umkehrung des partiellen euklidischen Abstandsterms zu dem a-priori-Wahrscheinlichkeitsterm für die ausgewählten Kandidatensymbole.

14. Verfahren nach Anspruch 1, umfassend Erzeugen von "Soft-Output"-Bit-Information für die Bits, die den Symbolen entsprechen, die von allen Antennen gesendet werden, durch:

- Wiederholen der berücksichtigten Schritte und Operationen eine Anzahl von Malen, die gleich einer Anzahl von Sendeantennen ist, wobei jedes der Male einer anderen Anordnung von Schichten, die den gesendeten Symbolen entsprechen, zugeordnet ist, wobei jede Schicht eine Referenzschicht in nur einer der Anordnungen ist, und dementsprechendes Anordnen der Spalten der Kanalmatrix vor der Weiterverarbeitung.

15. Verfahren nach Anspruch 1, wobei eine extrinsische Information ($L_e$) aus der a-priori-Information ($L_a$) und der a-posteriori-Information ($L_p$) berechnet wird.

16. Verfahren nach Anspruch 15, wobei die extrinsische Information ($L_e$) dem zweiten Modul (322) zugeführt wird.

17. Verfahren nach Anspruch 16, wobei die a-priori-Information ($L_a$) auf den modulierten Symbolen von dem zweiten Modul (322) aus der Information ($L_e$) in jeder der Verarbeitungsinstanzen aktualisiert wird.

18. Verfahren nach Anspruch 17, wobei die extrinsische Information ($L_e$) in mindestens zwei Verarbeitungsinstanzen berechnet wird durch:

- Berechnen, in einer ersten Instanz, der extrinsischen Information ($L_e$) ohne jede a-priori-Information ($L_a$), und
- Berechnen, in einer zweiten Instanz, der extrinsischen Information ($L_e$) aus der a-priori-Information ($L_a$), die von dem zweiten Modul (322) zurückgeführt wird, bis nach einer gegebenen Anzahl von Instanzen eine Entscheidung über den Bitwert getroffen wird.

19. Verfahren nach Anspruch 18, wobei die Verarbeitungsinstanzen als Verarbeitungsiterationen oder Verarbeitungsstufen ausgewählt werden.

20. Verfahren nach Anspruch 1, wobei das Identifizieren eines Satzes von Werten für mindestens ein Referenzsendesymbol, wobei die möglichen Werte Kandidatenwerte darstellen, umfasst

- Bestimmen eines Satzes möglicher Werte, deren Kardinalität sich als eine Funktion der betrachteten Verarbeitungsiteration ändert und typischerweise für eine zunehmende Anzahl von Iterationen reduziert wird.

21. Verfahren nach Anspruch 1, wobei die Erkennung (320) in dem reellen Definitionsbereich durch Rückgriff auf eine Darstellung durchgeführt wird, die die In-Phase- und die Quadraturphase-Komponente getrennt behandelt, von:

- dem empfangenen Vektor (Y),
- der Kanalzustands-Informationsmatrix (H), und
- den modulierten Symbolen, die von den Sendequellen gesendet werden.

22. Verfahren nach Anspruch 16, wobei die extrinsische Information ($L_e$) und die a-priori-Information ($L_a$) als Werte in dem logarithmischen Definitionsbereich ausgetauscht werden.

23. Verfahren nach Anspruch 1, wobei das zweite Modul ein Vorwärtsfehlerkorrekturcode-Decodierer (322) ist.

24. Verfahren nach Anspruch 1, wobei die Sendequellen (20) und die Empfangselemente (22) Antennen (20, 22) sind.

25. Verfahren nach Anspruch 16, wobei das Verfahren die Schritte aufweist:

- Unterziehen der a-priori-Information ($L_a$) von dem zweiten Modul (322) einer Verschachtelung (326), bevor die Sequenzen erkannt werden (320), und
- Unterziehen der "Soft-Output"-Information ($L_e$) einer Entschachtelung (324), vor dem Einspeisen in das zweite Modul (322).

26. Vorrichtung zur Erkennung (320) von Sequenzen digital modulierter Symbole, wobei die modulierten Symbole von mehreren Sendequellen (20) gesendet werden und von mehreren Empfangselementen (22) empfangen werden, wobei die Vorrichtung konfiguriert ist, das Verfahren nach einem der Ansprüche 1 bis 25 durchzuführen.

27. Empfänger zum Empfangen von digital modulierten Symbole, wobei der Empfänger die Vorrichtung nach Anspruch 26 aufweist.

28. Computerprogrammprodukt, das in den Speicher eines Computers geladen werden kann und das Softwarecodeteile umfasst, die angepasst sind zur Durchführung der Schritte nach einem der Ansprüche 1 bis 25, wenn das Produkt auf einem Computer ausgeführt wird.


**Revendications**

1. Procédé de détection (320) de suites de symboles modulés numériquement, lesdits symboles modulés étant transmis par des sources d'émission multiples (20) et reçus par des éléments de réception multiples (22) et groupés sous forme d'un vecteur reçu (Y) de suites de symboles modulés numériquement, dans lequel ledit procédé comprend l'étape suivante :

   - recevoir une matrice d'information d'état de canal (H) d'un premier module (312) et traiter ladite matrice d'information d'état de canal (H), ledit traitement comprenant une triangulation de ladite matrice d'information d'état de canal (H),
   - identifier un ensemble de valeurs pour au moins un symbole de transmission de référence, les valeurs possibles représentant des valeurs candidates ;
   - déterminer pour chaque valeur candidate un ensemble de suites de symboles transmis, obtenu :

      a) en estimant pour chaque valeur candidate un ensemble de suites de valeurs estimées pour les symboles transmis restants, et
      b) en groupant lesdites valeurs candidates et lesdites valeurs estimées ;

   - calculer une mesure pour chacune desdites suites de symboles transmis,
   - sélectionner la suite de symboles transmis qui maximise ladite mesure, une pour chaque valeur candidate, et
   - mémoriser la valeur de la mesure liée et la suite sélectionnée associée,

   **caractérisé en ce que** :

   - ledit procédé reçoit d'un deuxième module (322) des informations *a priori* ($L_a$) sur lesdits symboles modulés,
   - ledit calcul d'une mesure pour chacune desdites suites de symboles transmis comprend le calcul d'une mesure de probabilité a *posteriori* pour chacune desdites suites de symboles transmis,
   - ledit ensemble de suites de valeurs estimées pour les symboles transmis restants est estimé pour chaque valeur candidate en estimant un par un les symboles de transmission restants, en réalisant des détections successives, par les opérations suivantes :

      a) calculer un terme de distance euclidienne partielle associé au symbole de transmission à estimer ;
      b) sélectionner comme symbole transmis candidat le symbole transmis ayant la plus petite valeur dudit terme de distance euclidienne partielle ;
      c) sélectionner comme autre symbole transmis candidat le symbole de transmission ayant la plus grande information *a priori* ($L_a$) dudit symbole ;
      d) calculer une mesure de probabilité *a posteriori* partielle associée au symbole de transmission à estimer ;
      e) sélectionner en tant que symbole de transmission estimé le symbole qui maximise ladite mesure de probabilité *a posteriori* partielle, et

   - ledit procédé comprend le calcul d'une information de sortie souple binaire *a posteriori* ($L_p$) pour lesdites suites

sélectionnées de symboles transmis à partir des mesures liées pour lesdites suites sélectionnées de symboles transmis.

2. Procédé selon la revendication 1, dans lequel ledit procédé comprend l'étape de rangement des couches envisagées pour la détection.

3. Procédé selon la revendication 1, dans lequel le traitement dudit procédé est réalisé dans le domaine complexe en calculant des parties réelles et imaginaires.

4. Procédé selon la revendication 1, dans lequel ledit vecteur reçu (Y) est un vecteur reçu complexe (Y) et ladite matrice d'information d'état de canal (H) est une matrice d'information d'état de canal complexe (H).

5. Procédé selon la revendication 4, dans lequel le traitement de ladite matrice d'information d'état de canal complexe (H) comprend les étapes suivantes :

   - factoriser ladite matrice d'information d'état de canal complexe (H) en une matrice orthogonale et une matrice triangulaire.

6. Procédé selon la revendication 5, dans lequel ledit nombre d'éléments de réception (22) est égal au nombre de sources d'émission (20) moins un.

7. Procédé selon la revendication 6, dans lequel le traitement de ladite matrice d'information d'état de canal complexe (H) comprend les étapes suivantes :

   - factoriser ladite matrice d'information d'état de canal complexe (H) en une matrice orthogonale et une matrice triangulaire avec sa dernière ligne éliminée.

8. Procédé selon la revendication 5, dans lequel le traitement dudit vecteur reçu complexe (Y) comprend :

   - la multiplication de ladite transposée conjuguée de la matrice orthogonale par ledit vecteur reçu complexe (Y).

9. Procédé selon la revendication 4, dans lequel le traitement de ladite matrice d'information d'état de canal complexe (H) comprend les étapes suivantes :

   - former une matrice de Gram en utilisant ladite matrice d'information d'état de canal complexe (H),
   - réaliser une décomposition de Cholesky de ladite matrice de Gram, et
   - calculer la matrice appelée Moore-Penrose en tant qu'inverse de ladite matrice d'information d'état de canal complexe (H), ce qui donne une matrice pseudo-inverse.

10. Procédé selon la revendication 9, dans lequel le traitement dudit vecteur reçu complexe (Y) comprend les étapes suivantes :

    - multiplier ladite matrice pseudo-inverse par le vecteur reçu complexe (Y).

11. Procédé selon la revendication 1, dans lequel ladite estimation des symboles de transmission restants un par un en réalisant des détections successives comprend les étapes suivantes :

    - sélectionner au moins comme autre symbole transmis candidat le symbole transmis ayant la deuxième plus grande information *a priori* ($L_a$) dudit symbole.

12. Procédé selon la revendication 1, dans lequel ledit calcul du terme de distance euclidienne partielle associé au symbole de transmission à estimer comprend le calcul du carré du module de la différence entre un terme scalaire de vecteur reçu traité et une somme de produits, chaque produit impliquant un coefficient de la matrice d'information d'état de canal triangulée (H) et une estimation de symbole de transmission correspondante.

13. Procédé selon la revendication 1, dans lequel ledit calcul de la mesure de probabilité *a posteriori* partielle comprend les étapes suivantes :

- ajouter l'inverse dudit terme de distance euclidienne partielle audit terme de probabilité *a priori* pour lesdits symboles candidats sélectionnés.

**14.** Procédé selon la revendication 1 comprenant la génération d'informations de sortie souple binaire pour les bits correspondants aux symboles transmis par toutes les antennes, par les opérations suivantes :

- répéter les étapes et opérations considérées un nombre de fois égal à un nombre d'antennes d'émission, chaque fois étant associée à une disposition différente de couches correspondant aux symboles transmis, chaque couche étant une couche de référence dans une seule des dispositions, et disposer les colonnes de la matrice de canal en conséquence avant un traitement supplémentaire.

**15.** Procédé selon la revendication 1, dans lequel une information extrinsèque ($L_e$) est calculée à partir de ladite information *a priori* ($L_a$) et de ladite information *a posteriori* ($L_p$).

**16.** Procédé selon la revendication 15, dans lequel ladite information extrinsèque ($L_e$) est transmise audit deuxième module (322).

**17.** Procédé selon la revendication 16, dans lequel ladite information *a priori* ($L_a$) sur lesdits symboles modulés provenant dudit deuxième module (322) est actualisée à partir de ladite information ($L_e$) à chaque occurrence dudit traitement.

**18.** Procédé selon la revendication 17, dans lequel ladite information extrinsèque ($L_e$) est calculée dans au moins deux occurrences de traitement :

- en calculant dans une première occurrence l'information extrinsèque ($L_e$) sans information *a priori* ($L_a$), et
- en calculant dans une deuxième occurrence l'information extrinsèque ($L_e$) à partir de l'information *a priori* ($L_a$) réintroduite depuis ledit deuxième module (322), jusqu'à ce qu'une décision soit prise sur la valeur binaire après un nombre donné d'occurrences.

**19.** Procédé selon la revendication 18, dans lequel lesdites occurrences de traitement sont sélectionnées en tant qu'itérations de traitement ou en tant qu'étapes de traitement.

**20.** Procédé selon la revendication 1, dans lequel l'identification d'un ensemble de valeurs pour au moins un symbole de transmission de référence, les valeurs possibles représentant des valeurs candidates, comprend :

- la détermination d'un ensemble de valeurs possibles dont la cardinalité change en fonction de l'itération de traitement considérée, et qui, généralement, diminue pour un nombre croissant d'itérations.

**21.** Procédé selon la revendication 1, dans lequel la détection (320) est réalisée dans le domaine réel en ayant recours à une représentation, qui traite séparément les composantes en phase et en quadrature :

- dudit vecteur reçu (Y),
- de ladite matrice d'information d'état de canal (H), et
- desdits symboles modulés transmis par lesdites sources d'émission.

**22.** Procédé selon la revendication 16, dans lequel ladite information extrinsèque ($L_e$) et ladite information *a priori* ($L_a$) sont échangées en tant que valeurs dans le domaine logarithmique.

**23.** Procédé selon la revendication 1, dans lequel ledit deuxième module est un décodeur de code correcteur d'erreur (322).

**24.** Procédé selon la revendication 1, dans lequel lesdites sources d'émission (20) et lesdits éléments de réception (22) sont des antennes (20, 22).

**25.** Procédé selon la revendication 16, dans lequel ledit procédé comprend les étapes suivantes :

- soumettre ladite information *a priori* ($L_a$) provenant dudit deuxième module (322) à un entrelacement (326) avant que lesdites suites ne soient détectées (320), et
- soumettre ladite information de sortie souple ($L_e$) à un désentrelacement (324) avant de la transmettre audit deuxième module (322).

26. Dispositif permettant de détecter (320) des suites de symboles modulés numériquement, lesdits symboles modulés étant transmis par des sources d'émission multiples (20) et reçus par des éléments de réception multiples (22), ledit dispositif étant configuré pour exécuter le procédé de l'une quelconque des revendications 1 à 25.

27. Récepteur permettant de recevoir des symboles modulés numériquement, le récepteur comportant le dispositif de la revendication 26.

28. Produit de programme informatique pouvant être chargé dans la mémoire d'un ordinateur et comprenant des parties de code logiciel adaptées pour exécuter les étapes de l'une quelconque des revendications 1 à 25 quand le produit fonctionne sur un ordinateur.

Figure 1a

Figure 1b

Figure 2

Figure 3

Figure 4A

Figure 4B

Figure 5A

Figure 5B

Figure 6A

Figure 6B

**EP 1 971 063 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2007012053 A

### Non-patent literature cited in the description

- **I.E. TELATAR.** Capacity of Multi-Antenna Gaussian Channels. *Eur. Trans. Tel.,* November 1999, vol. 10 (6), 585-595
- **G.J. FOSCHINI ; M. GANS.** On the Limits of Wireless Communication in a Fading Environment. *Wireless Pers. Comm.,* March 1998, vol. 6, 311-355
- **W. VAN ETTEN.** Maximum Likelihood Receiver for Multiple Channel Transmission Systems. *IEEE Trans. on Comms,* February 1976, vol. 24 (2), 276-283
- **C. BERROU ; A. GLAVIEUX ; P. THITIMAJSHIMA.** Near Shannon limit error-correction coding and decoding: Turbo codes. *Proc. ICC 1993,* May 1993, 1064-1070
- **C. DOUILLARD et al.** Iterative Correction of Intersymbol Interference: Turbo-Equalization. *European Trans. on Telecomm. and Rel. Techn.,* September 1995, vol. 6, 507-511
- **H. V. POOR ; S. VERDU.** Probability of Error in MMSE Multiuser Detection. *IEEE Trans. on Information Theory,* May 1997, vol. 43, 858-871
- **P. W. WOLNIANSKY ; G. J. FOSCHINI ; G. D. GOLDEN ; R. A. VALENZUELA.** V-BLAST: An Architecture for Realizing Very High Data Rates Over the Rich-Scattering Wireless Channel. *Proc. ISSSE-98,* 29 September 1998
- **G. J. FOSCHINI ; G. D. GOLDEN ; R. A. VALENZUELA ; P. W. WOLNIANSKY.** Simplified Processing for High Spectral Efficiency Wireless Communications employing multi-element arrays. *IEEE Journal on Selected Areas in Communications,* November 1999, vol. 17 (11), 1841-1852
- **M. SELLATHURAI ; S. HAYKIN.** Turbo-BLAST for wireless communications: Theory and experiments. *IEEE Trans. on Sign. Proc.,* October 2002, vol. 50, 2538-2546
- **B. LU ; G. YUE ; X. WANG.** Performance analysis and design optimization of LDPC coded MIMO OFDM systems. *IEEE Trans. Signal Proc.,* xxx
- **D. ZUYDERHOFF ; X. WAUTELET et al.** MMSE Turbo Receiver for space-frequency bit-interleaved coded OFDM. *Proc. IEEE Vehicular Technology Conf.,* October 2003, vol. 1, 567-571
- **W.-J. CHOI ; R. NEGRI ; J. M. CIOFFI.** Combined ML and DFE Decoding for the V-BLAST System. *Proc. IEEE Int. Conf. on Communications,* June 2000, vol. 3, 1243-1248
- **Y. LI ; Z. Q. LUO.** Parallel Detection for V-BLAST System. *IEEE GLOBECOM,* May 2002, vol. 1, 340-344
- **D. W. WATERS ; J. R. BARRY.** The Chase Family of Detection Algorithms for Multiple-Input Multiple-Ouput Channels. *IEEE GLOBECOM,* November 2004, vol. 4, 2635-2639
- **D. W. WATERS ; J. R. BARRY.** The Chase Family of Detection Algorithms for Multiple-Input Multiple-Ouput Channels. *Submitted to IEEE Trans. on Information Theory,* September 2005
- **E. AGRELL ; T. ERIKSSON et al.** Closest Point Search in Lattices. *IEEE Trans. on Inf. Theory,* August 2002, vol. 48 (8
- **M. O. DAMEN ; A. CHKEIF ; J.-C. BELFIORE.** Lattice Codes Decoder for Space-Time Codes. *IEEE Commun. Letters,* May 2000, vol. 4 (5), 161-163
- **M. SITI ; M. P. FITZ.** A novel soft-output layered orthogonal lattice detector for multiple antenna communications. *Proc. IEEE Int. Conf. on Communications,* June 2006
- **A. TOMASONI ; M.FERRARI ; D. GATTI ; F. OSNATO ; S. BELLINI.** A Low Complexity Turbo MMSE Receiver for W-LAN MIMO Systems. *Proc. IEEE Int. Conf. on Communications,* June 2006
- **YUTAK YASUDA ; KANSHIRO KASHIKI ; YASUO HIRATA.** High-Rate Punctured Convolutional Codes for Soft Decision Viterbi Decoding. *IEEE Transactions On Communications,* March 1984, vol. COM-32 (3), 315-319
- **S. DOLINAR ; D. DIVSALAR.** Weight Distributions for Turbo Codes Using Random and Nonrandom Permutations. *JPL TDA Progr, Rep.,* August 1995, vol. 42-122
- **E. VITERBO ; J. BOUTROS.** A Universal Lattice Code Decoder for Fading Channels. *IEEE Trans. on Inf. Theory,* July 1999, vol. 45 (5

- **DAMEN ; EL GAMAL ; G. CAIRE.** On Maximum-Likelihood Detection and the Search for the Closest Lattice Point. *IEEE Trans. on Inf. Theory,* October 2003, vol. 49 (10
- **VAN NEE ; VAN ZELST.** Maximum likelihood decoding in a space division multiplexing system. *Awater, Proc. VTC,* 2000, vol. 1, 6-10
- **B. HASSIBI.** An efficient square-root algorithm for BLAST. *Proc. ICASSP,* June 2000, 11737-11740
- **G. H. GOLUB ; C. F. VAN LOAN.** Matrix Computations. Johns Hopkins University Press, 1996